# EUROPEAN PATENT APPLICATION

(11) **EP 4 589 926 A1**
(43) Date of publication of application: **23.07.2025**
(21) Application number: 25152157.1
(22) Date of filing: 16.01.2025
(51) Int. Cl.: H04L 67/131, H04L 67/1061, A63F 13/30, H04L 69/40, H04W 4/20, H04W 8/24, H04W 8/30, H04L 1/08, H04L 61/00, G07F 17/32, H04N 21/6375, H04N 21/63, H04N 21/637, H04N 21/845, H04N 21/20, H04N 21/40

(54) **INFORMATION PROCESSING METHODS, INFORMATION PROCESSING PROGRAMS, INFORMATION PROCESSING APPARATUSES, AND INFORMATION PROCESSING SYSTEMS**

(30) Priority: 19.01.2024 JP 2024007018
(71) Applicant: Nintendo Co., Ltd., Kyoto 601-8501 (JP)
(72) Inventor: MATSUOKA, Masayoshi, Kyoto, 601-8501 (JP); KANAYA, Takumi, Kyoto, 601-8501 (JP); YAN, Weiwei, Kyoto, 601-8501 (JP); KUROSE, Sho, Kyoto, 601-8501 (JP)
(74) Representative: Bardehle Pagenberg Partnerschaft mbB Patentanwälte Rechtsanwälte

(57) **Abstract**

An information processing system includes a base apparatus and a subsidiary apparatus. The base apparatus transmits a beacon containing apparatus identification information for identifying the base apparatus, and data identification information for identifying data transmitted from the base apparatus. The subsidiary apparatus, when receiving the beacon, transmits an action request frame for requesting data to the base apparatus. The base apparatus, when receiving the action request frame, transmits a plurality of action response frames containing a plurality of pieces of partial data obtained by dividing the data to the subsidiary apparatus. The subsidiary apparatus, when there is any of the plurality of pieces of data that has not been received, transmits an action request frame for requesting re-transmission of the data that has not been received to the base apparatus.

## Description

### BACKGROUND OF THE INVENTION

### Field of the Invention

The present invention relates to information processing methods, information processing programs, information processing apparatuses, and information processing systems.

### Description of the Background Art

In the prior art, there is a technique of transmitting an action frame containing information such as an ID before establishing a wireless connection (see, for example, Japanese Laid-Open Patent Publication No. 2018-148301).

However, there is an upper limit on the size of data contained in a frame, and therefore, there is room for an improvement in transmission of a relatively large size of data.

With the above in mind, it is an object of the present invention to provide an information processing method, information processing program, information processing apparatus, and information processing system capable of transmitting and receiving a relatively large size of data.

### SUMMARY OF THE INVENTION

To solve the above problem, the present invention has the following configurations.

### First Configuration

According to a first configuration, an information processing method performed on a second information processing apparatus is provided. The information processing method includes: a step for, when determining that a first frame containing first apparatus identification information for identifying a first information processing apparatus, and data identification information for identifying data transmitted from the first information processing apparatus, has been received, transmitting, by wireless communication, a second frame containing second apparatus identification information for identifying the second information processing apparatus, and data request information for requesting the data, which is identified based on the data identification information, with the second frame addressed to the first information processing apparatus, which is identified by the first apparatus identification information; a step for receiving a plurality of third frames transmitted from the first information processing apparatus, which has received the second frame, with the plurality of third frames addressed to the second information processing apparatus, wherein the plurality of third frames contain a plurality of pieces of partial data obtained by dividing the data; and a step for, when determining that there is at least one of the plurality of pieces of partial data that has not been received, transmitting, by wireless communication, a fourth frame containing the second apparatus identification information and data re-request information for requesting re-transmission of the data that has not been received, with the fourth frame addressed to the first information processing apparatus, which is identified by the first apparatus identification information.

With the above configuration, the second information processing apparatus can receive a relatively large size of data in portions from the first information processing apparatus. When there is any partial data that has not been received, the second information processing apparatus can request re-transmission of that partial data.

### Second Configuration

According to a second configuration, in the first configuration, the transmission of the first frame and the transmission of the plurality of third frames by the first information processing apparatus, and the transmission of the second frame and the transmission of the fourth frame by the second information processing apparatus, may be executed without wireless communication being established between the first information processing apparatus and the second information processing apparatus.

With the above configuration, the second information processing apparatus can obtain a relatively large size of data from the first information processing apparatus without a connection being established between the first and second information processing apparatuses.

### Third Configuration

According to a third configuration, in the first or second configuration, the plurality of third frames may each contain an offset and a size of a respective one of the plurality of pieces of partial data. The second information processing apparatus may identify any of the plurality of pieces of partial data that has not been received, based on the offsets and sizes of the plurality of pieces of partial data, and transmit the fourth frame for requesting re-transmission of the identified data.

With the above configuration, the second information processing apparatus can identify partial data that has not been received, and request the first information processing apparatus to re-transmit that partial data.

### Fourth Configuration

According to a fourth configuration, in any of the first to third configurations, the second information processing apparatus may transmit the second frame containing a maximum receivable size of a frame that the second information processing apparatus is allowed to receive. The second information processing apparatus may receive the plurality of third frames containing the plurality of pieces of partial data obtained by the first information processing apparatus dividing the data according to the maximum receivable size.

With the above configuration, the first information processing apparatus can divide data into a plurality of pieces according to the maximum receivable size, and transmit the plurality of pieces of data.

### Fifth Configuration

According to a fifth configuration, in any of the first to fourth configurations, the second information processing apparatus may transmit the second frame containing request identification information for identifying request of the data. The second information processing apparatus may receive the plurality of third frames containing the request identification information.

With the above configuration, the second information processing apparatus can receive a third frame corresponding to request identification information.

### Sixth Configuration

According to a sixth configuration, in any of the first to fifth configurations, the second information processing apparatus may transmit the fourth frame containing information indicating the number of pieces of requested data, and information for identifying each piece of requested data.

With the above configuration, the second information processing apparatus can specify the number of pieces of requested data. For example, the second information processing apparatus can request a plurality of pieces of data using the single fourth frame.

### Seventh Configuration

According to a seventh configuration, in any of the first to sixth configurations, the second frame and the fourth frame may have the same structure.

With the above configuration, a request for first transmission of data and a request for re-transmission of data can be performed using a frame having the same structure.

### Eighth Configuration

According to an eighth configuration, in any of the first to seventh configurations, the second information processing apparatus may repeatedly transmit the fourth frame until all of the data has been received.

With the above configuration, the second information processing apparatus can receive data even if the second information processing apparatus fails to receive the data a plurality of times.

### Ninth Configuration

According to a ninth configuration, in any of the first to eighth configurations, the second information processing apparatus, when receiving at least one of the plurality of third frames, may set a time limit based on remaining data of the data, and try to receive the remaining data until the time limit has elapsed.

With the above configuration, a time limit can be set according to the amount of remaining data.

### Tenth Configuration

According to a tenth configuration, in any of the first to ninth configurations, the second information processing apparatus, when receiving at least one of the plurality of third frames containing error indication information that is transmitted when the first information processing apparatus determines that there is an error in the second frame, may stop receiving the following third frames.

With the above configuration, reception can be stopped when an error occurs. For example, consumption of resources can be reduced.

### Eleventh Configuration

According to an eleventh configuration, in any of the first to tenth configurations, the data may be moving image data or still image data, and the second information processing apparatus may display a moving image or a still image based on the received data.

With the above configuration, the second information processing apparatus can receive and display image data from the first information processing apparatus.

### Twelfth Configuration

According to a twelfth configuration, in any of the first to eleventh configurations, the second frame, the third frame, and the fourth frame may be an action frame.

With the above configuration, data can be requested and transmitted using an action frame.

### Thirteenth Configuration

According to a thirteenth configuration, in any of the first to twelfth configurations, the first frame may be a beacon frame.

With the above configuration, the first information processing apparatus can transmit the data identification information using a beacon frame.

### Fourteenth Configuration

According to a fourteenth configuration, in any of the first to twelfth configurations, the first frame may be an action frame.

With the above configuration, the first information processing apparatus can transmit the data identification information using an action frame.

### Fifteenth Configuration

According to a fifteenth configuration, in any of the first to fourteenth configurations, the data identification information may be an application ID for identifying an application.

With the above configuration, the second information processing apparatus can receive an application ID from the first information processing apparatus, and receive data based on the ID.

### Sixteenth Configuration

According to a sixteenth configuration, in any of the first to fifteenth configurations, the second information processing apparatus, after receiving the data, may transmit a connection request for establishing a connection between the first information processing apparatus and the second information processing apparatus.

With the above configuration, the second information processing apparatus, after receiving data, can establish a connection between the first information processing apparatus and the second information processing apparatus.

### Seventeenth Configuration

According to a seventeenth configuration, in the sixteenth configuration, after a connection is established between the first information processing apparatus and the second information processing apparatus, an application related to the data may be executed between the first information processing apparatus and the second information processing apparatus.

With the above configuration, the second information processing apparatus, before execution of an application, can receive data related to the application.

### Eighteenth Configuration

According to an eighteenth configuration, in the seventeenth configuration, the application may be a game application. The second information processing apparatus may transmit operation data related to a game operation to the first information processing apparatus with a connection established therebetween, receive, from the first information processing apparatus, a game image based on a result of a game process executed by the first information processing apparatus based on the operation data, and display the game image.

With the above configuration, second information processing apparatus can transmit operation data to the first information processing apparatus, and display an image based on the result of a game process executed in the first information processing apparatus based on the operation data.

### Nineteenth Configuration

According to a nineteenth configuration, in the seventeenth or eighteenth configuration, the first frame may contain information related to an input device supported by the application.

With the above configuration, the first frame containing information related to an input device can be transmitted.

### Twentieth Configuration

According to a twentieth configuration, an information processing method performed on a first information processing apparatus is provided. The information processing method includes: a step for transmitting, by wireless communication, a first frame containing first apparatus identification information for identifying the first information processing apparatus, and data identification information for identifying data transmitted from the first information processing apparatus; a step for, when determining that a second frame transmitted from a second information processing apparatus having received the first frame with the second frame addressed to the first information processing apparatus, and containing second apparatus identification information for identifying the second information processing apparatus and data request information for requesting transmission of the data, has been received, transmitting, by wireless communication, a plurality of third frames containing a plurality of pieces of partial data obtained by dividing the data, with the plurality of third frames addressed to the second information processing apparatus, which is identified by the second apparatus identification information; and a step for, when determining that a fourth frame transmitted from the second information processing apparatus, which has failed to receive at least one of the plurality of pieces of partial data, with the fourth frame addressed to the first information processing apparatus, and containing the second apparatus identification information and data re-request information for requesting re-transmission of at least a portion of the data, has been received, re-transmitting, by wireless communication, a fifth frame containing the data re-requested with the fourth frame to the second information processing apparatus, which is identified by the second apparatus identification information.

### Twenty-first Configuration

According to a twenty-first configuration, in the twentieth configuration, the transmission of the first frame, the transmission of the plurality of third frames, and the transmission of the fifth frame by the first information processing apparatus, and the transmission of the second frame and the transmission of the fourth frame by the second information processing apparatus, may be executed without wireless communication being established between the first information processing apparatus and the second information processing apparatus.

### Twenty-second Configuration

According to a twenty-second configuration, in the twentieth or twenty-first configuration, the second frame may contain a maximum receivable size of a frame that the second information processing apparatus is allowed to receive. The first information processing apparatus may divide the data into the plurality of pieces of partial data according to the maximum receivable size.

### Twenty-third Configuration

According to a twenty-third configuration, in any of the twentieth to twenty-second configuration, the second frame may contain request identification information for identifying request of the data. The first information processing apparatus may transmit the plurality of third frames containing the request identification information.

### Twenty-fourth Configuration

According to a twenty-fourth configuration, in any of the twentieth to twenty-third configurations, the fourth frame may contain information indicating the number of pieces of requested data, and information for identifying each piece of requested data. The first information processing apparatus may transmit the fifth frame based on the information indicating the number of pieces of requested data, and the information for identifying each piece of requested data.

### Twenty-fifth Configuration

According to a twenty-fifth configuration, in any of the twentieth to twenty-fourth configurations, the third frame and the fifth frame may have the same structure.

### Twenty-sixth Configuration

According to a twenty-sixth configuration, in any of the twentieth to twenty-fifth configurations, the first information processing apparatus may determine whether or not there is any error in the received second frame, and when determining that there is an error, transmit the plurality of third frames containing information indicating the error.

### Twenty-seventh Configuration

According to a twenty-seventh configuration, in any of the twentieth to twenty-sixth configurations, the data may be moving image data or still image data.

### Twenty-eighth Configuration

According to a twenty-eighth configuration, in any of the twentieth to twenty-seventh configurations, the second frame, the third frame, the fourth frame, and the fifth frame may be an action frame.

### Twenty-ninth Configuration

According to a twenty-ninth configuration, in any of the twentieth to twenty-eighth configurations, the first frame may be a beacon frame.

### Thirtieth Configuration

According to a thirtieth configuration, in any of the twentieth to twenty-ninth configurations, the first frame may be an action frame.

### Thirty-first Configuration

According to a thirty-first configuration, in any of the twentieth to thirtieth configurations, the data identification information may be an application ID for identifying an application.

### Thirty-second Configuration

According to a thirty-second configuration, in any of the twentieth to thirty-first configurations, the first information processing apparatus, when receiving a connection request transmitted from the second information processing apparatus after the second information processing apparatus receives the data, may establish a connection between the first information processing apparatus and the second information processing apparatus.

### Thirty-third Configuration

According to a thirty-third configuration, in the thirty-second configuration, after a connection is established between the first information processing apparatus and the second information processing apparatus, an application related to the data may be executed between the first information processing apparatus and the second information processing apparatus.

### Thirty-fourth Configuration

According to a thirty-fourth configuration, in the thirty-third configuration, the application may be a game application. The first information processing apparatus may receive operation data related to a game operation from the second information processing apparatus with a connection established therebetween, execute a game process based on the operation data received from the second information processing apparatus, generates a game image based on the game process, and transmit the game image to the second information processing apparatus with a connection established therebetween.

### Thirty-fifth Configuration

According to a thirty-fifth configuration, in the thirty-third or thirty-fourth configuration, the first frame may contain information related to an input device supported by the application.

According to another configuration, a wireless communication system including a first information processing apparatus and a second information processing apparatus both having a wireless communication function, in which the first information processing apparatus includes: information transmission means for transmitting, by wireless communication, a first frame containing first apparatus identification information for identifying the first information processing apparatus, and data identification information for identifying data transmitted from the first information processing apparatus; request determination means for determining whether or not a second frame containing second apparatus identification information for identifying the second information processing apparatus, and data request information for requesting transmission of the data; data transmission means for, when determining that the second frame has been received, transmitting, by wireless communication, a plurality of third frames containing a plurality of pieces of partial data obtained by dividing the data, with the plurality of third frames addressed to the second information processing apparatus, which is identified by the second apparatus identification information; re-request determination means for determining whether or not a fourth frame containing the second apparatus identification information, and data re-request information for requesting re-transmission of at least a portion of the data, has been received; and data re-transmission means for, when determining the fourth frame has been received, re-transmitting, by wireless communication, a fifth frame containing the at least a portion of the data re-requested by the fourth frame, with the fifth frame addressed to the second information processing apparatus, which is identified by the second apparatus identification information. The second information processing apparatus includes: reception determination means for determining whether or not the first frame has been received; data request transmission means for, when determining that the first frame has been received, transmitting, by wireless communication, the second frame containing the second apparatus identification information, and the data request information for requesting the data identified based on the data identification information contained in the first frame, with the second frame addressed to the first information processing apparatus, which is identified by the first apparatus identification information; reception means for receiving the plurality of third frames; unsuccessful reception determination means for determining whether or not there is any of the plurality of pieces of partial data that has not been received; and data re-request transmission means for, when determining that there is at least one of the plurality of pieces of partial data that has not been received, transmitting, by wireless communication, the fourth frame containing the second apparatus identification information, and the data re-request information for requesting re-transmission of the data that has not been received, with the fourth frame addressed to the first information processing apparatus, which identified by the first apparatus identification information.

According to the present invention, a relatively large size of data can be transmitted from the first information processing apparatus to the second information processing apparatus.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a diagram illustrating an example of a game system 1 according to this exemplary embodiment,
FIG. 2 is a diagram illustrating an example of an information processing apparatus 10,
FIG. 3 is a block diagram showing an example of an internal configuration of a main body apparatus 2,
FIG. 4 is a diagram for describing the flow of processes in a base apparatus and a subsidiary apparatus executed until the start of a game G1 between the base apparatus and the subsidiary apparatus,
FIG. 5 is a diagram illustrating an example of the structure of an action request frame,
FIG. 6 is a diagram illustrating an example of the structure of an action response frame,
FIG. 7 is a sequence diagram when icon image data is transmitted from a base apparatus to a subsidiary apparatus using an action frame,
FIG. 8 is a diagram illustrating an example of icon image data that is transmitted from a base apparatus to a subsidiary apparatus using an action frame,
FIG. 9 is a diagram illustrating an example of screen transition and communication of a base apparatus and a subsidiary apparatus until a game G1 is executed between the base apparatus and the subsidiary apparatus,
FIG. 10 is a diagram illustrating an example of screen transition and communication of a base apparatus and a subsidiary apparatus until a game G1 is executed between the base apparatus and the subsidiary apparatus,
FIG. 11 is a diagram illustrating an example of data stored in an information processing apparatus 10a as a base apparatus,
FIG. 12 is a diagram illustrating an example of data stored in an information processing apparatus 10b as a subsidiary apparatus,
FIG. 13 is a flowchart illustrating an example of a menu process executed in an information processing apparatus 10,
FIG. 14 is a flowchart illustrating an example of a base apparatus process,
FIG. 15 is a flowchart illustrating an example of an action response transmission process of step S204 in a base apparatus process,
FIG. 16 is a flowchart illustrating an example of a subsidiary apparatus process,
FIG. 17 is a flowchart illustrating an example of a data obtaining process of step S305 in a subsidiary apparatus process,
FIG. 18 is a flowchart illustrating an example of a base apparatus in-game process of step S209, and
FIG. 19 is a flowchart illustrating an example of a subsidiary apparatus in-game process of step S312.

### DESCRIPTION OF PREFERRED EMBODIMENTS

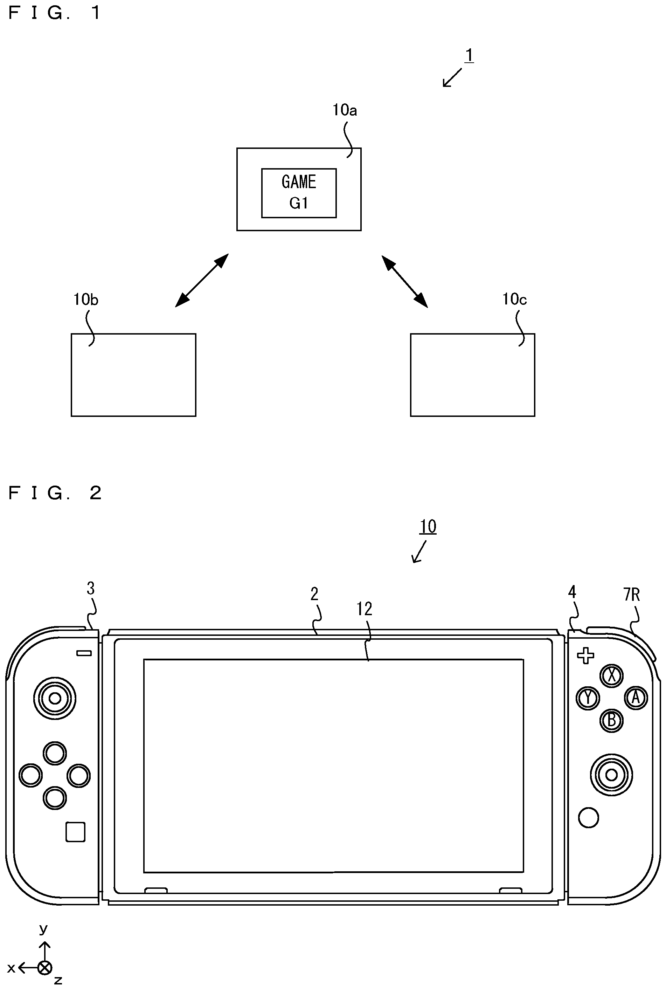

An example of an information processing system according to this exemplary embodiment will be described below. FIG. 1 is a diagram illustrating an example of a game system 1 according to this exemplary embodiment. As illustrated in FIG. 1, the game system 1 includes a plurality of information processing apparatuses 10a to 10c. The information processing apparatuses 10a to 10c are herein sometimes collectively referred to as information processing apparatuses 10. FIG. 1 illustrates a case in which the game system 1 includes three information processing apparatuses 10, and a game is executed between the three information processing apparatuses 10. The number of information processing apparatuses 10 included in the game system 1 may be two, or three or more.

The information processing apparatus 10 may, for example, a handheld game apparatus. It should be noted that the information processing apparatus 10 may be a stationary game apparatus, a personal computer, a tablet terminal, a smartphone, or the like. The plurality of information processing apparatuses 10 may be all the same type of apparatus or different types of apparatuses.

The information processing apparatus 10 has a wireless communication function, and is capable of performing communication in accordance with a wireless LAN standard, such as IEEE 802.11 (a, b, g, n, ac, ax, etc.). For example, the information processing apparatus 10 is capable of performing wireless communication (herein referred to local communication) with other information processing apparatuses located therearound. By local communication with other information processing apparatuses, a game can be executed between a plurality of information processing apparatuses 10. A mode in which a game is executed between a plurality of information processing apparatuses 10 using such local communication is herein referred to as a "local communication multi-play mode". The information processing apparatus 10 is also capable of connecting to the Internet or other networks through a wireless LAN access point (not shown). For example, the information processing apparatus 10 is capable of connecting to the Internet and executing a game in an online mode. In the online mode, a game is executed between a plurality of information processing apparatuses connected to the Internet.

Each information processing apparatus 10 is used by a different user. For example, the information processing apparatus 10a is used by a user A, the information processing apparatus 10b is used by a user B, and the information processing apparatus 10c is used by a user C.

The information processing apparatus 10 is capable of executing an application program possessed by itself (e.g., a game program stored in a flash memory 26 or an external storage medium described below). For example, in the case in which the information processing apparatus 10a has a game program for a game G1, the information processing apparatus 10a can execute the game G1. The game G1 may, for example, be any game such as a racing game, fighting game, or shooting game. In addition, in the case in which the information processing apparatuses 10a to 10c each have a game program for a game G2 that supports the local communication multi-play mode, then if a connection is established between the information processing apparatuses 10a to 10c, the users A to C can play the game G2 in the local communication multi-play mode.

Meanwhile, for example, in the case in which the information processing apparatuses 10b and 10c do not have a game program for the game G1, the information processing apparatuses 10b and 10c cannot execute the game G1. In this case, even if the game G1 supports the local communication multi-play mode, the users A to C cannot play the game G1.

In the game system 1 of this exemplary embodiment, if the information processing apparatuses 10b and 10c, which do not have a game program for the game G1, establish a connection to the information processing apparatus 10a to join the game G1 that is being executed in the information processing apparatus 10a, the users A to C can play the game G1. Here, the information processing apparatus 10a, which provides the game G1, is referred to as a "base apparatus", and the information processing apparatuses 10b and 10c, which is provided with the game G1, are referred to as a "subsidiary apparatus".

Specifically, the base apparatus, which has a program for the game G1, wirelessly transmits a relatively small size of information related to the game G1 to information processing apparatuses 10 located therearound without establishing a connection, while the subsidiary apparatuses receive the information. The subsidiary apparatuses **further** receive, from the base apparatus, a relatively large size of data related to the game G1. Thereafter, a connection is established between the base apparatus and the subsidiary apparatuses, and the game G1 is executed. A flow from the establishment of a connection between the base apparatus and the subsidiary apparatuses to the execution of the game G1 is described below.

### Configuration of Information Processing Apparatus

Next, the information processing apparatus 10 that is an example of this exemplary embodiment will be described. FIG. 2 is a diagram illustrating an example of the information processing apparatus 10. The exemplary information processing apparatus 10 of this exemplary embodiment includes a main body apparatus 2, and a left controller 3 and a right controller 4. The main body apparatus 2 executes various processes (e.g., a game process) in the information processing apparatus 10. The left controller 3 and the right controller 4 include a plurality of buttons and an analog stick as an example of operation units for the user's input.

The main body apparatus 2 is configured such that the left controller 3 and the right controller 4 are removably attached thereto. Specifically, the information processing apparatus 10 can be used as a unified apparatus obtained by attaching the left controller 3 and the right controller 4 to the main body apparatus 2. Alternatively, the main body apparatus 2 and the left controller 3 and the right controller 4 can be used separately. It should be noted that the left controller 3 and the right controller 4 are also herein referred to as "controllers".

It should be noted that different controllers and different methods are used in different games that are executed thereby. For example, in some games, the left controller 3 and the right controller 4 are removed from the main body apparatus 2, one or two players use the left controller 3 and the right controller 4 while holding the left controller 3 and the right controller 4 in landscape position. Alternatively, in other games, with or without the left controller 3 and the right controller 4 removed from the main body apparatus 2, a single player uses the left controller 3 and the right controller 4 while holding the left controller 3 and the right controller 4 in portrait position. **In** addition, a third controller that is different from the left controller 3 and the right controller 4 may be coupled to the main body apparatus 2 wirelessly or by wire. **In** other games, the third controller may be used.

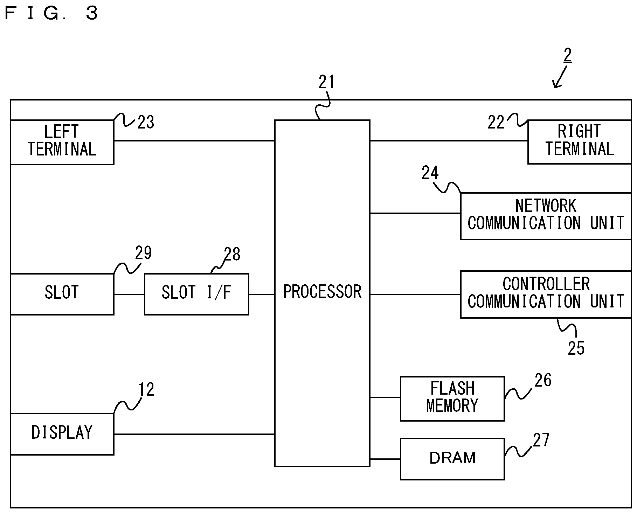

FIG. 3 is a block diagram showing an example of an internal configuration of the main body apparatus 2. As shown in FIG. 3, the main body apparatus 2 includes a processor 21. The processor 21 is an information processing unit that executes various information processes (e.g., a game process) that are executed by the main body apparatus 2. For example, the processor 21 includes at least one central processing unit (CPU) and at least one graphics processing unit (GPU). It should be noted that the processor 21 may only include a CPU, or may be configured by a system-on-a-chip (SoC) that has a plurality of functions such as a CPU function and a GPU function. The processor 21 executes an information processing program (e.g., a game program) or other instructions that are stored in storage (e.g., an internal non-transitory storage medium such as a flash memory 26, an external non-transitory storage medium attached to a slot 29, or the like), thereby executing various information processes.

The main body apparatus 2 further includes a display 12. The display 12 displays an image generated by the main body apparatus 2. In this exemplary embodiment, the display 12 is a liquid crystal display (LCD). However, the display 12 may be any type of display device. The display 12 is coupled to the processor 21. The processor 21 displays a generated image (e.g., an image generated by executing the above information processes) and/or an externally obtained image on the display 12.

The main body apparatus 2 further includes a left terminal 23 through which the main body apparatus 2 performs wired communication with the left controller 3, and a right terminal 22 through which the main body apparatus 2 performs wired communication with the right controller 4.

The main body apparatus 2 further includes a flash memory 26 and a dynamic random access memory (DRAM) 27 as an example of an internal storage medium included in the main body apparatus 2. The flash memory 26 and the DRAM 27 are coupled to the processor 21. The flash memory 26 is mainly used to store various types of data (or programs) that are stored in the main body apparatus 2. The DRAM 27 is used to temporarily store various types data that are used in information processing.

The main body apparatus 2 includes a slot 29. The slot 29 has a shape that allows an external storage medium to be attached to the main body apparatus 2. The external storage medium is, for example, used to store data (e.g., saved data of a game application or the like) that is used by the main body apparatus 2 and/or a program (e.g., a game program or the like) that is executed by the main body apparatus 2.

The main body apparatus 2 includes a slot interface (hereinafter abbreviated to "I/F") 28. The slot I/F 28 is coupled to the processor 21. The slot I/F 28 is coupled to the slot 29, and reads and writes data from and to an external storage medium (e.g., a dedicated memory card) attached to the slot 29 in accordance with instructions from the processor 21.

The processor 21 reads and writes data from and to the flash memory 26, the DRAM 27, and each of the above storage media as appropriate, thereby executing the above information processes.

The main body apparatus 2 further includes a network communication unit 24. The network communication unit 24 is coupled to the processor 21. The network communication unit 24 includes an antenna (not shown), a processor that controls wireless communication, and a memory. For example, the network communication unit 24 connects to a wireless LAN to communicate with an external apparatus in accordance with an IEEE 802.11 standard.

The main body apparatus 2 includes a controller communication section 25. The controller communication section 25 is coupled to the processor 21. The controller communication section 25 wirelessly communicates with the left controller 3 and/or the right controller 4. The communication method between the main body apparatus 2 and the left controller 3 and the right controller 4 is not particularly limited. In this exemplary embodiment, the controller communication section 25 performs communication with the left controller 3 and with the right controller 4 in accordance with the Bluetooth (registered trademark) standard.

The processor 21 is coupled to the left terminal 23 and the right terminal 22. When performing wired communication with the left controller 3, the processor 21 transmits data to the left controller 3 via the left terminal 23 and also receives operation data from the left controller 3 via the left terminal 23. Further, when performing wired communication with the right controller 4, the processor 21 transmits data to the right controller 4 via the right terminal 22 and also receives operation data from the right controller 4 via the right terminal 22. Thus, in this exemplary embodiment, the main body apparatus 2 can perform both wired communication and wireless communication with each of the left controller 3 and the right controller 4.

It should be noted that, in addition to the elements shown in FIG. 2, the main body apparatus 2 includes a battery that supplies power and an output terminal for outputting images and audio to a display device (e.g., a television) other than the display 12.

A MAC frame, which is specified in the IEEE 802.11 standards, includes a header and a frame body. The header includes a frame control field and an address information field. The frame control field includes information indicating the type and subtype of the frame. There are some types of frames, e.g., a management frame, a control frame, and a data frame. There are some subtypes of management frames, e.g., a beacon, an association request, an association response, a probe request, a probe response, an action, and the like, each of which has a function. For example, the beacon is a frame for announcing various pieces of information required for communication to other wireless devices. The association request is a frame for establishing a connection. The association response is a frame for responding to an association request, and containing information indicating whether or not a connection is to be admitted.

### Outline of Processes in Base Apparatus and Subsidiary Apparatus

**In** this exemplary embodiment, before the start of the game G1 between a base apparatus and a subsidiary apparatus, a relatively large size of data related to the game G1 is exchanged between the base apparatus and the subsidiary apparatus using action frames without a connection being established. The flow of processes in the base apparatus and the subsidiary apparatus executed until the start of the game G1 between the base apparatus and the subsidiary apparatus will be described below.

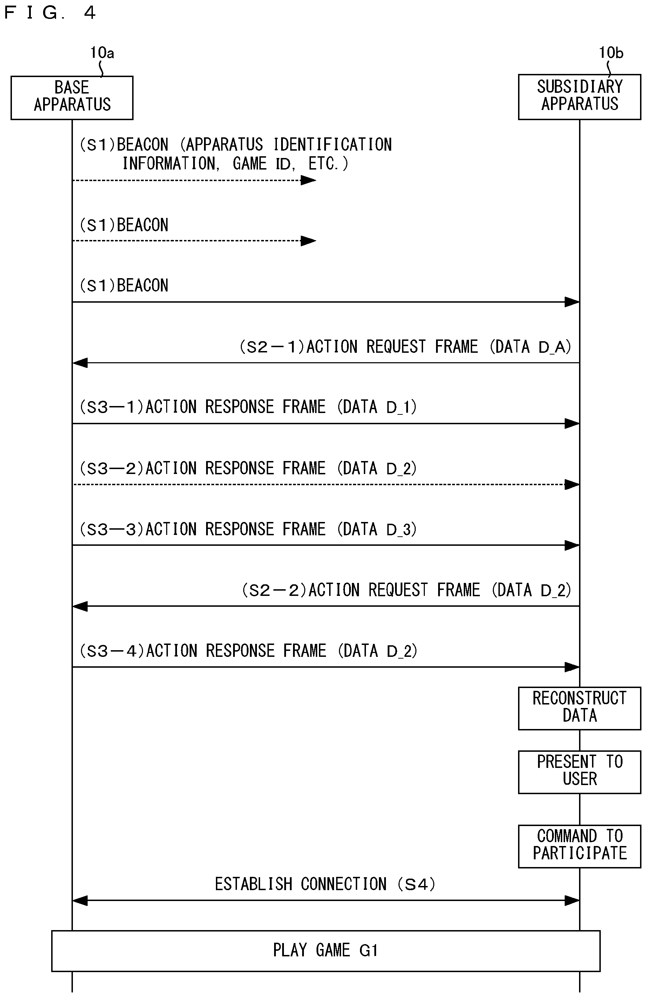

FIG. 4 is a diagram for describing the flow of processes in the base apparatus and the subsidiary apparatus executed until the start of the game G1 between the base apparatus and the subsidiary apparatus. FIG. 4 illustrates the processes in the base apparatus and the subsidiary apparatus in chronological order from the top to the bottom. It should be noted that although FIG. 4 illustrates the flow of processes between the information processing apparatus 10a as a base apparatus and the information processing apparatus 10b as a subsidiary apparatus, similar processes are executed between the base apparatus and the information processing apparatus 10c as a subsidiary apparatus.

As illustrated in FIG. 4, the information processing apparatus 10a as a base apparatus initially wirelessly transmits a beacon (step S1). The beacon contains a relatively small size of information. Specifically, the base apparatus transmits a beacon containing apparatus identification information for identifying the base apparatus, and the game **ID** of the game G1 in a broadcast manner. The apparatus identification information may, for example, be a MAC address given to the network communication unit 24 of the information processing apparatus 10. Alternatively, the apparatus identification information may be information (e.g., a serial number) uniquely given to the information processing apparatus 10. Alternatively, the apparatus identification information may be an IP address, an apparatus name given to the information processing apparatus 10 by the user, or the user's name. The game ID is information uniquely given to the game G1. The game ID is an example of data identification information for identifying data that is transmitted from the base apparatus to the subsidiary apparatus. The beacon may also contain the title of the game G1 in addition to the game ID. The beacon may also contain information related to a controller supported by the game G1 (the number or types of supported controllers, information indicating whether the apparatus is in portrait position or landscape position, etc.). The beacon is transmitted from the base apparatus periodically (e.g., every several tens of milliseconds to several hundreds of milliseconds).

The information processing apparatus 10b as a subsidiary apparatus scans a plurality of wireless channels to search for a base apparatus located therearound. The subsidiary apparatus receives a beacon transmitted from the information processing apparatus 10a as a base apparatus. At this time, a connection has not yet been established between the base apparatus and the subsidiary apparatus. The subsidiary apparatus transmits, to the base apparatus, an action frame containing apparatus identification information for identifying the subsidiary apparatus, and data request information for requesting data determined based on a game ID received from the base apparatus (step S2-1). In this exemplary embodiment, the action frame is a vendor-specific action frame, including a frame indicating a request and a frame indicating a response to the request. Specifically, in this exemplary embodiment, the action frame is a frame in which "action" is set as the subtype, vendor specific is designated in the category code field, and vendor-specific information is contained in the OUI field. The action frame indicating a request is herein referred to as an "action request frame". The action frame indicating a response to the request is herein referred to as an "action response frame".

Specifically, the subsidiary apparatus transmits an action request frame that is addressed to the MAC address of the base apparatus. The action request frame contains the apparatus identification information of the subsidiary apparatus, and data request information indicating a request for data D_A determined based on the game ID. The data D_A is a relatively large size of data stored in the base apparatus, and is, for example, icon image data of the game G1 executed in the base apparatus. The icon image may, for example, be an image of the package of the game G1. The icon image data may be data of a still image or data of a moving image. The data D_A may also be image data of a character that appears in the game G1, or sound data associated with the game G1. The data D_A may also be text data indicating the title of the game G1. For example, in order to support a language that is set in the subsidiary apparatus, titles in a plurality of languages may be transmitted from the base apparatus to the subsidiary apparatus. Text data indicating titles in a plurality of languages may be a relatively large size of data, and cannot be transmitted from the base apparatus to the subsidiary apparatus using a beacon. In that case, the subsidiary apparatus may use an action request frame to request text data indicating titles in a plurality of languages from the base apparatus. The data D_A may also be text data indicating a detailed description of the game G1. The beacon transmitted from the base apparatus may, for example, contain the user ID of the user A. In that case, the action request frame may contain data request information for requesting data based on the user ID of the user A. For example, the data based on the user ID may be image data (still image or moving image data) of the user A's character. It should be noted that data requested using an action request frame is also sometimes referred to as "requested data".

The base apparatus, when receiving an action request frame from the subsidiary apparatus, transmits one or more action response frames that are addressed to the subsidiary apparatus (steps S3-1 to S3-3). Since the data D_A is a relatively large size of data, the base apparatus cannot transmit all of the data D_A using a single action response frame. Therefore, the base apparatus divides the data D_A into a plurality of pieces of partial data (e.g., data D_1 to data D_3), which are transmitted in a plurality of action response frames to the subsidiary apparatus.

The subsidiary apparatus receives the plurality of action response frames transmitted from the base apparatus. It should be noted that the subsidiary apparatus tries to receive action response frames from the base apparatus using the same wireless channel until necessary data has been received from the base apparatus. Here, it is assumed that the subsidiary apparatus has successfully received the data D_1 and the data D_3, and has failed to receive the data D_2. In that case, the subsidiary apparatus transmits, to the base apparatus, an action request frame containing the apparatus identification information of the subsidiary apparatus, and data re-request information for requesting re-transmission of the data D_2 (step S2-2).

In response to reception of the action request frame for requesting the data D_2, the base apparatus transmits an action response frame containing the data D_2 to the subsidiary apparatus (step S3-4).

When the subsidiary apparatus receives the action response frame containing the data D_2, the subsidiary apparatus will have received the data D_1 to data D_3 from the base apparatus. Thereafter, the subsidiary apparatus reconstructs the data D_A based on the received data D_1 to data D_3.

Thus, the subsidiary apparatus requests the data D_A, which has a relatively large size, as requested data from the base apparatus using an action frame. The base apparatus transmits, to the subsidiary apparatus, the partial data D_1 to partial data D_3, which are obtained by dividing the data D_A, in a plurality of action frames. As a result, the subsidiary apparatus can receive, from the base apparatus, the relatively large-size data D_A (e.g., icon image data, text data, etc. of the game G1) related to the game G1, which cannot be received using a single action frame. Furthermore, when there is other necessary data, the subsidiary apparatus transmits an action request frame for requesting transmission of that other data to the base apparatus, and the base apparatus divides that other data into a plurality of portions, which are transmitted in a plurality of action response frames.

Next, the subsidiary apparatus presents the data D_A received from the base apparatus to the user. For example, the subsidiary apparatus displays an icon image of the game G1 on the display 12 based on the received data D_A. The subsidiary apparatus also displays information (e.g., the user's name) related to the base apparatus. The user of the subsidiary apparatus determines whether or not to participate in the game G1 based on the displayed icon image or information related to the base apparatus. When a command to participate in the game is issued in the subsidiary apparatus, a wireless LAN connection is established between the subsidiary apparatus and the base apparatus (step S4).

Specifically, authentication is initially performed between the information processing apparatus 10a as a base apparatus and the information processing apparatus 10b as a subsidiary apparatus. For example, an authentication frame is exchanged between the base apparatus and the subsidiary apparatus for authentication. The authentication scheme may, for example, be either open authentication or common key authentication. After the authentication, association is performed. In the association, a parameter and an association ID subsequently used are shared by the base apparatus and the subsidiary apparatus. Specifically, for example, the subsidiary apparatus transmits an association request frame to the base apparatus. After receiving the association request frame, the base apparatus transmits an association response frame indicating whether or not a connection is admitted to the subsidiary apparatus. When the base apparatus transmits an association response frame indicating that a connection is admitted to the subsidiary apparatus, and the subsidiary apparatus receives the association response frame, a wireless LAN connection is established between the base apparatus and the subsidiary apparatus.

In this exemplary embodiment, when a connection is established between the base apparatus and the subsidiary apparatus, a network in an infrastructure mode is formed in which the base apparatus serves as a base station, and the subsidiary apparatus serves as a terminal station. It should be noted that in another embodiment, a network in an infrastructure mode may be formed in which the subsidiary apparatus serves as a base station, and the base apparatus serves as a terminal station. In that case, the above association request frame is transmitted from the base apparatus to the subsidiary apparatus. Alternatively, a network in an ad hoc mode may be formed in which both the base apparatus and the subsidiary apparatus serve as a terminal station, and the terminal stations communicate with each other. In addition, when communication is established, another communication based on a conventional technique may be performed as appropriate. In addition, when the base apparatus does not serve as a base station, the base apparatus may transmit the game ID and the like by broadcasting an action frame instead of a beacon.

After a wireless LAN connection is established between the base apparatus and the subsidiary apparatus, transmission control protocol (TCP) connection is established between the base apparatus, which has a game program for the game G1, and the subsidiary apparatus, which does not have a game program for the game G1 by three-way handshaking. Thereafter, the game G1 begins between the base apparatus and the subsidiary apparatus, and is played between a plurality of users. During execution of the game, the base apparatus and the subsidiary apparatus exchange game data related to the game. For example, the subsidiary apparatus transmits operation data to the base apparatus using the user datagram protocol (UDP). The base apparatus transmits image data to the subsidiary apparatus using TCP. Thus, game data is exchanged between the base apparatus and the subsidiary apparatus, so that the game G1 is executed. It should be noted that operation data of the subsidiary apparatus may be transmitted to the base apparatus using TCP. In addition, image data may be transmitted from the base apparatus to the subsidiary apparatus using UDP.

### Structure of Action Frame

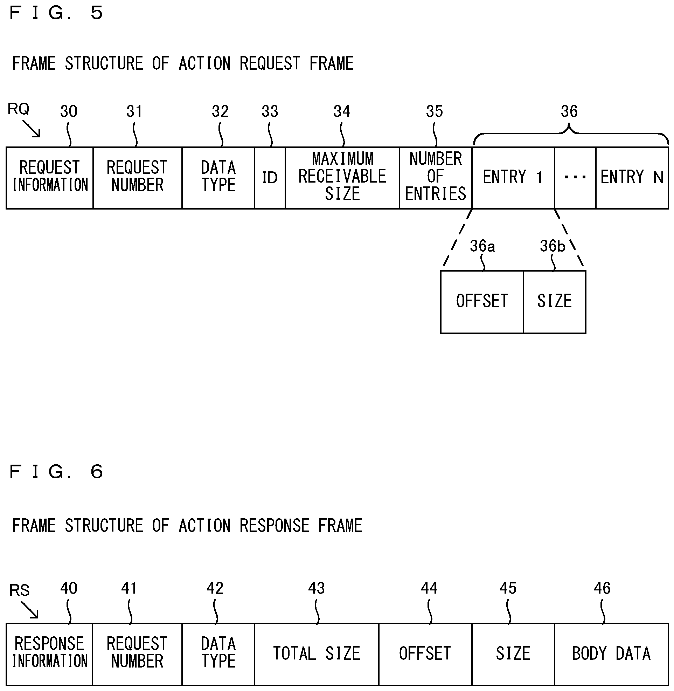

Next, the structures of the above action frames will be described. FIG. 5 is a diagram illustrating an example of the structure of an action request frame. FIG. 6 is a diagram illustrating an example of the structure of an action response frame. FIGS. 5 and 6 illustrate an example of data contained in the frame body of an action frame.

As illustrated in FIG. 5, the action request frame contains information 30 (e.g., "3") indicating that the frame is an action request frame. The action request frame also contains a request number 31, a data type 32, an ID 33, a maximum receivable size 34, the number of entries 35, and one or more entries 36. It should be noted that the action request frame further contains version information indicating the version of a protocol.

The request number 31 is for identifying a request. The subsidiary apparatus, when transmitting an action request frame, determines a request number that is not the same as those of any other requests. The data type 32 is information indicating the type of requested data. The data type 32 includes icon image data (moving image or still image data), text data, and the like. The ID 33 is an identifier of data specified by the data type 32. The ID 33, which is based on the game ID received in a beacon from the base apparatus, may be the received game ID itself or a value that is uniquely calculated based on the received game ID. For example, the ID 33 may be a value obtained by adding a data type to the received game ID, or a hash value of the received game ID. Data identified by a data type and an ID is requested data that is requested by the subsidiary apparatus from the base apparatus.

The maximum receivable size 34 is a maximum data size that an apparatus that transmits an action request frame can receive in a single frame. The number of entries 35 is the number of entries contained in an action request frame. Each entry 36 contains information for identifying partial data of requested data. Specifically, an entry contains an offset 36a and a size 36b. The offset 36a is an offset value of requested data. In the first action request frame, the offset value is "0". The size 36b is a size of the requested data from the offset value. For example, in the first action request frame, the size is the maximum value (the value in which all bits are "1"). When the size is the maximum value, this means that all of requested data is requested by the subsidiary apparatus.

In addition, as illustrated in FIG. 6, the action response frame contains information 40 (e.g., "4") indicating that the frame is an action response frame. The action response frame also contains a request number 41, a data type 42, a total size 43, an offset 44, a size 45, and body data 46. The request number 41 and the data type 42 of the action response frame are set to the same values as those of the request number 31 and the data type 32 of the corresponding action request frame.

The total size 43 is of data (requested data) identified by the data type 32 and the ID 33 of the action request frame. The offset 44 is an offset value of data (body data) contained in the frame, of the requested data. The size 45 is the size of the body data contained in the frame. The body data 46 is data body contained in the frame and is partial data obtained by dividing the requested data into a plurality of portions.

### Example Sequence of Transmission and Reception of Icon Image Data

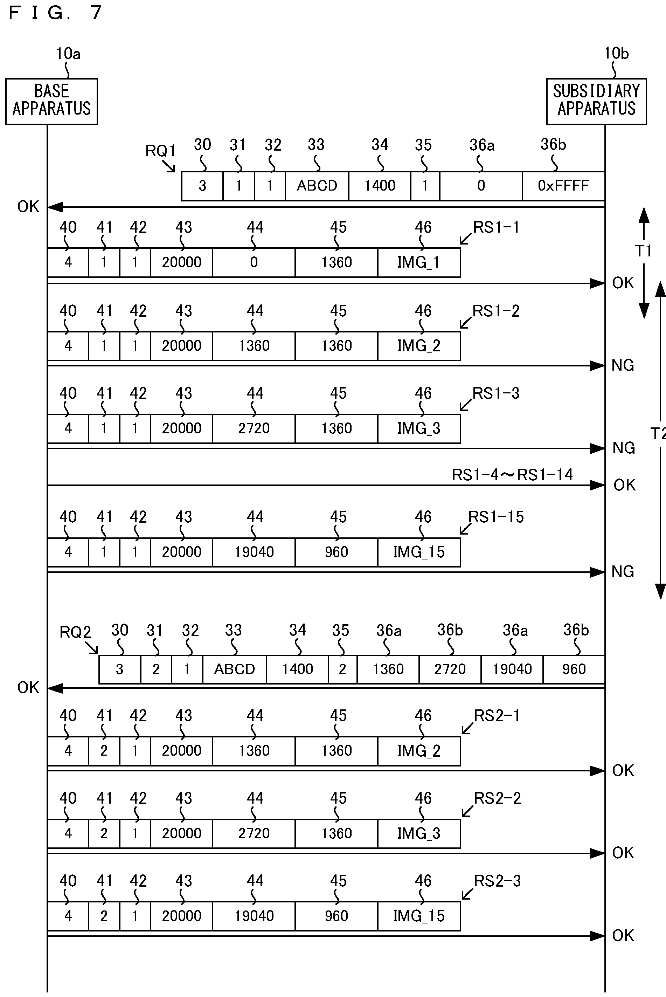

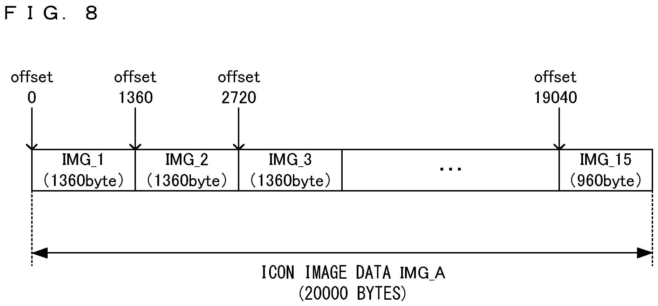

Next, the flow of processes executed when icon image data is transmitted from the base apparatus to the subsidiary apparatus using action frames without a connection being established between the base apparatus and the subsidiary apparatus will be described with reference to FIG. 7. FIG. 7 is an example of a sequence diagram when icon image data is transmitted from the base apparatus to the subsidiary apparatus using action frames. FIG. 8 is a diagram illustrating an example of the icon image data that is transmitted from the base apparatus to the subsidiary apparatus using action frames.

As illustrated in FIG. 7, the information processing apparatus 10b as a subsidiary apparatus transmits an action request frame RQ1 that is addressed to the base apparatus based on a beacon received from the information processing apparatus 10a as a base apparatus. In the action request frame RQ1, the information 30 indicating that the frame type is the action request frame is set to "3". In addition, in the action request frame RQ1, the request number 31 is set to "1". In addition, the data type 32 is set to the value "1", which indicates that the data type is an icon image, and the ID 33 for identifying an icon image is set to "ABCD". Here, it is assumed that requested data identified by the data type 32 and the ID 33 is icon image data IMG_A illustrated in FIG. 8. The total size of the icon image data IMG_A is "20000". In addition, in the action request frame RQ1, the maximum receivable size 34 of a frame that can be received by the subsidiary apparatus is set to "1400". In addition, since the frame is the first action request frame for requesting the icon image data IMG_A, the number of entries 35 is set to "1", the offset 36a is set to "0", and the size 36b is set to "0xFFFF", which is a value indicating a maximum value.

The base apparatus receives the action request frame RQ1 from the subsidiary apparatus. In response to the reception of the action request frame RQ1, the base apparatus transmits an action response frame that is addressed to the information processing apparatus 10b as a subsidiary apparatus. In this action response frame, the information 40 indicating that the frame is an action response frame is set to "4", and the request number 41 is set to "1". In the description that follows, the action response frame that corresponds to the action request frame RQ1 and in which the request number 41 is set to "1" is referred to as an "action response frame RS1". In addition, the n-th action response frame RS1 that is transmitted by the base apparatus to the subsidiary apparatus is referred to as an "action response frame RS1-n".

In the action response frame RS1, the data type 42 is set to the value "1", which indicates that the data type is an icon image. In addition, the total size 43 of the icon image data IMG_A (requested data) is set to "20000".

Since the total size of the icon image data IMG_A is larger than the maximum reception size, the base apparatus divides the icon image data IMG_A into a plurality of pieces of partial data (IMG_1 to IMG_15), which are transmitted in a plurality of action response frames, as illustrated in FIG. 8.

For example, the first action response frame RS1-1 contains the partial data IMG_1, for which the offset 44 is set to "0" and the size 45 is set to "1360" bytes. The second action response frame RS1-2 contains the partial data IMG_2, for which the offset 44 is set to "1360" and the size 45 is set to "1360" bytes. The third action response frame RS1-3 contains the partial data IMG_3, for which the offset 44 is set to "2720" and the size 45 is set to "1360" bytes. These three action response frames are used to transmit data of the first 4080 bytes of the icon image data IMG_A (20000 bytes) from the base apparatus.

The base apparatus further transmits the fourth and following action response frames RS1 (RS1-4 to RS1-14) to the subsidiary apparatus, and transmits the final action response frame RS1-15 to the subsidiary apparatus. The final action response frame RS1-15 contains the partial data IMG_15, for which the offset 44 is set to "19040" and the size 45 is set to "960" bytes. The subsidiary apparatus may fail to receive these pieces of transmitted partial data. For example, when the subsidiary apparatus fails to receive an action response frame, or the subsidiary apparatus successfully receives an action response frame, but the received action response frame is not correct, the subsidiary apparatus fails to receive partial data. For example, it is assumed that the subsidiary apparatus has failed to receive the action response frames RS1-2, RS1-3, and RS1-15 of the 15 action response frames RS1, and has successfully received the action response frames RS1-1, and RS1-4 to RS1-14.

The subsidiary apparatus determines whether or not all of the icon image data IMG_A has been received, based on the offset and size of each received piece of partial data. If the subsidiary apparatus determines that not all of the icon image data IMG_A has been received, the subsidiary apparatus determines which partial data has not been received, based on the offset value of each piece of partial data. Thereafter, the subsidiary apparatus transmits, to the base apparatus, an action request frame RQ2 for requesting re-transmission of data that has not been received.

Here, the subsidiary apparatus has not received the partial data IMG_2, IMG_3, or IMG_15, and therefore, transmits the action request frame RQ2 for requesting re-transmission of these pieces of data to the base apparatus. For example, in the action request frame RQ2, the request number 31 is set to "2", and the number of entries 35 is set to "2". In the first entry 36 of the action request frame RQ2, the offset 36a is set to "1360", and the size 36b is set to "2720". In the second entry 36, the offset 36a is set to "19040", and the size 36b is set to "960".

The base apparatus, when receiving the action request frame RQ2, transmits an action response frame in which the request number 31 is set to "2" to the subsidiary apparatus. The action response frame that corresponds to the action request frame RQ2 and in which the request number 31 is set to "2" is referred to as an "action response frame RS2". In addition, the n-th action response frame RS2 that the base apparatus transmits to the subsidiary apparatus is referred to as an "action response frame RS2-n".

The first action response frame RS2-1 contains the partial data IMG_2, for which the offset 44 is set to "1360" and the size 45 is set to "1360" bytes. The second action response frame RS2-2 contains the partial data IMG_3, for which the offset 44 is set to "2720" and the size 45 is set to "1360" bytes. The third action response frame RS2-3 contains the partial data IMG_15, for which the offset 44 is set to "19040" and the size 45 is set to "960" bytes. The subsidiary apparatus tries to receive these three action response frames RS2.

When the subsidiary apparatus has failed to receive any of the three action response frames RS2, the subsidiary apparatus transmits an action request frame for requesting re-transmission of data that has not been received to the base apparatus again. The subsidiary apparatus repeatedly transmits such an action request frame until all of the icon image data IMG_A has been received. It should be noted that if not all of the icon image data IMG_A has been received although the action request frame has been transmitted a predetermined number of times, the subsidiary apparatus stops receiving the icon image data IMG_A, considering that a communication error has occurred.

If the subsidiary apparatus has successfully received the three action response frames RS2, the subsidiary apparatus reconstructs and obtains the icon image data IMG_A from all pieces of received partial data (IMG_1 to IMG_15).

It should be noted that when the base apparatus and the subsidiary apparatus detect a communication error during transmission and reception of data, the base apparatus and the subsidiary apparatus stop transmitting and receiving data.

For example, after transmitting an action request frame, the subsidiary apparatus tries to receive the first action response frame corresponding to that action request frame within a first time limit T1 (e.g., 200 ms). When the subsidiary apparatus has failed to receive the first action response frame within the first time limit T1, the subsidiary apparatus transmits an action request frame that is for requesting the same data and contains an updated request number. When the subsidiary apparatus has failed to receive requested data although the subsidiary apparatus has transmitted the action request frame "C1" times, the subsidiary apparatus ends requesting of data, considering that a communication error has occurred.

When the subsidiary apparatus has received an action response frame within the first time limit T1, the subsidiary apparatus sets a second time limit T2. When the second time limit T2 has elapsed, the subsidiary apparatus stops receiving data, and if there is the next requested data, the subsidiary apparatus transmits the next action request frame.

The second time limit T2 is, for example, the shorter of "T3 × C2" and "T3 × the number of remaining frames". Here, "T3" is a time that it takes for the base apparatus to transmit a single frame the maximum number of times of retrying, and may, for example, be 50 ms to 60 ms. "T3" may be contained in a beacon that is transmitted from the base apparatus to the subsidiary apparatus. "C2" is a predetermined integer. "The number of remaining frames" is the number of frames required for transmission of remaining data using action frames. For example, the subsidiary apparatus calculates the "number of remaining frames" based on the size of remaining data, and the size of data contained in an action frame, and multiplies the "number of remaining frames" by T3 to obtain a time that it takes to receive the remaining data. The subsidiary apparatus compares the calculated time with the fixed time "T3 × C2", and sets the shorter time as the second time limit T2. For example, the subsidiary apparatus, when receiving the first action response frame RS1-1 illustrated in FIG. 7, obtains the total size, and subtracts the size of the partial data IMG_1 received from that frame from the total size to obtain the size of the remaining data. The subsidiary apparatus may set the second time limit T2 based on the size of the remaining data.

Each time the subsidiary apparatus receives the action response frame RS1, the subsidiary apparatus sets the second time limit T2. It should be noted that the subsidiary apparatus, when receiving the first action response frame RS1-1 corresponding to an action request frame, may set the second time limit T2, and when receiving the next and following action request frames RS1, may not update the second time limit T2.

When the set second time limit T2 has elapsed since reception of the action response frame RS1, the subsidiary apparatus transmits the next action request frame RS2. When the subsidiary apparatus has not received all of requested data although an action request frame has been transmitted a predetermined number of times, the subsidiary apparatus stops receiving requested data, considering that a communication error has occurred.

In addition, the base apparatus, when receiving, from the subsidiary apparatus, an action request frame that contains a request for a data type that is not supported by itself, transmits, to the subsidiary apparatus, an action response frame in which the data type is set to a value indicating an error. In addition, the base apparatus, when detecting a deficiency in an action request frame received from the subsidiary apparatus, transmits, to the subsidiary apparatus, an action response frame in which the data type is set to a value indicating an error. In addition, for example, when the version of an action request frame transmitted by the subsidiary apparatus is different from any of the versions supported by the base apparatus, the base apparatus transmits, to the subsidiary apparatus, an action response frame in which the data type is set to a value indicating an error. When receiving an action response frame in which the data type is set to a value indicating an error, the subsidiary apparatus stops receiving subsequent data, considering that a communication error has occurred.

Thus, the subsidiary apparatus requests the base apparatus to transmit a relatively large size of data by transmitting an action request frame to the base apparatus. When the requested data cannot be transmitted in a single action frame, the base apparatus divides the requested data into a plurality of pieces of partial data, and transmits the plurality of pieces of partial data in a plurality of action response frames. The subsidiary apparatus, when failing to receive at least one of the plurality of pieces of partial data from the base apparatus, transmits, to the base apparatus, an action request frame for requesting re-transmission of partial data that has not been received. As a result, the subsidiary apparatus can reliably receive a relatively large size of data even in a state in which a connection is not established between the base apparatus and the subsidiary apparatus.

It should be noted that in the above embodiment, the icon image data IMG_A is divided into the partial data IMG_1 to IMG_15, and these pieces of partial data are transmitted in ascending order (in sequence from IMG_1 to IMG_15). However, these pieces of partial data may be transmitted in any order. For example, the pieces of partial data may be transmitted in descending order (in sequence from IMG_15 to IMG_1) of the icon image data IMG_A. In addition, the subsidiary apparatus does not necessarily receive the pieces of partial data in the same order in which the base apparatus transmits the pieces of partial data.

In addition, in the above embodiment, the subsidiary apparatus is configured to transmit the next action request frame after the second time limit T2 has elapsed, where the second time limit T2 is set to a time that it takes to receive remaining data. The second time limit T2 may be set to other times. For example, the second time limit T2 may be set to a predetermined time. Alternatively, the second time limit T2 may be set to a time during which at least a portion of remaining data can be received.

In the foregoing description, the subsidiary apparatus, when transmitting an action request frame for requesting certain data X, transmits an action request frame for requesting the next data Y after the set time limit (T1 or T2) has elapsed. In another embodiment, the subsidiary apparatus may transmit an action request frame for requesting another piece of data Y before the time limit set for reception of certain data X has elapsed. For example, the subsidiary apparatus may transmit an action request frame RQX for requesting image data X (e.g., icon image data of a game), and thereafter, may transmit an action request frame RQY for requesting text data Y (e.g., data indicating the title of a game) during a period of time when the subsidiary apparatus is receiving a plurality of action response frames RSX in response to the request. In addition, the subsidiary apparatus may receive a plurality of action response frames RSY corresponding to the action request frame RQY during a period of time when the subsidiary apparatus is receiving the plurality of action response frames RSX.

It should be noted that in wireless LAN communication based on IEEE 802.11, an ACK frame is sent by a data receiving apparatus to a data transmitting apparatus to acknowledge successful reception of data transmitted in a unicast manner. The data transmitting apparatus, when not receiving the ACK frame, transmits the data again, considering that the transmitted data has not been received by the receiving apparatus. For example, when the base apparatus transmits the action response frame RS1-2 to the subsidiary apparatus, then if the subsidiary apparatus successfully receives the action response frame RS1-2, the subsidiary apparatus sends an ACK frame back to the base apparatus. The base apparatus, when not receiving the ACK frame within a predetermined time limit (a time shorter than the first time limit T1 and the second time limit T2), transmits the same action response frame RS1-2 to the subsidiary apparatus again. The base apparatus re-transmits the action response frame RS1-2 at most the maximum number of times of retrying. If, when such re-transmission has been performed the maximum number of times of retrying, the subsidiary apparatus has not successfully received the action response frame RS1-2, the subsidiary apparatus cannot receive the partial data IMG_2. In such a case, as described above, the subsidiary apparatus transmits the action request frame RQ2 to the base apparatus after the second time limit T2 has elapsed, thereby requesting the base apparatus to transmit the partial data IMG_2 again. As a result, the subsidiary apparatus can obtain data that has not successfully been received.

### Example of Screen Transition and Communication of Base Apparatus and Subsidiary Apparatus

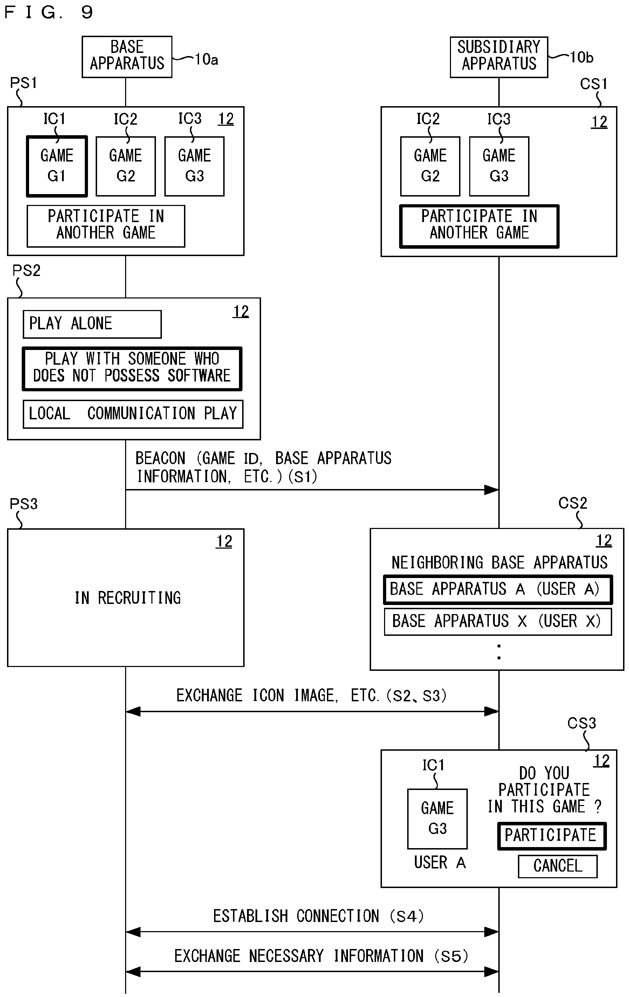

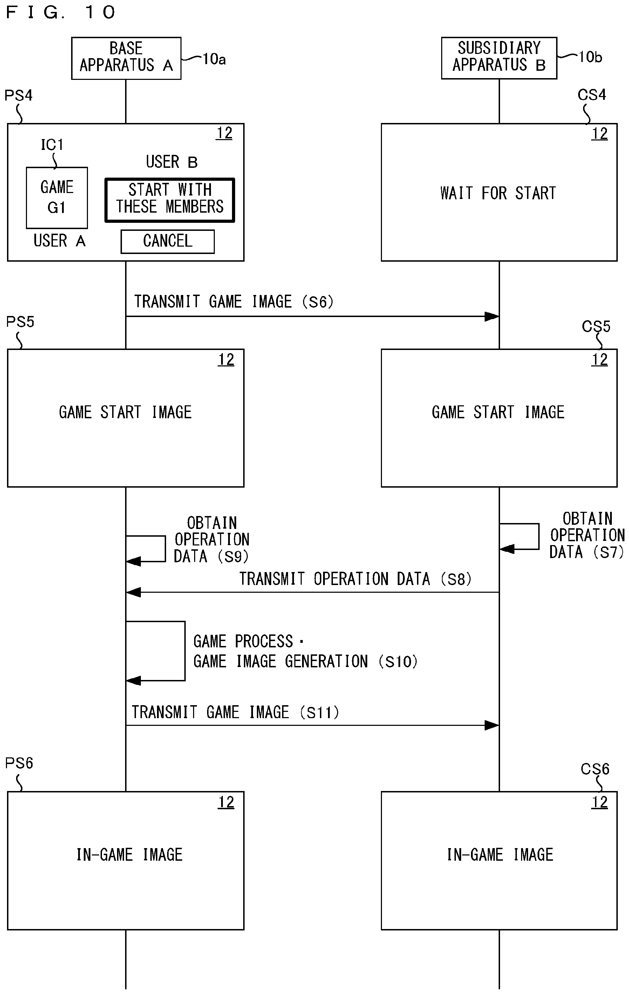

Next, screen transition and communication of the base apparatus and the subsidiary apparatus until the game G1 is executed between the base apparatus and the subsidiary apparatus will be described. FIGS. 9 and 10 are diagrams illustrating an example of screen transition and communication of the base apparatus and the subsidiary apparatus until the game G1 is executed between the base apparatus and the subsidiary apparatus.

As illustrated in FIG. 9, when the information processing apparatus 10a is turned on, a menu screen PS1 (also referred to as a home screen) is initially displayed on the display 12. It should be noted that at this time, the information processing apparatus 10a has not yet served as a base apparatus, and operates alone. The menu screen PS1 displays icon images of a plurality of games that can be executed in the information processing apparatus 10a. For example, the information processing apparatus 10a has game programs for the game G1, the game G2, and the game G3, and can execute these games. Therefore, the menu screen PS1 of the information processing apparatus 10a displays an icon image IC1 of the game G1, an icon image IC2 of the game G2, and an icon image IC3 of the game G3. The user A of the information processing apparatus 10a selects any of the icon images IC1 to IC3. As a result, the game program corresponding to the selected icon image is executed.

In addition, the menu screen PS1 displays a command image showing "participate in another game" below the icon image corresponding to each game, for example. The command image is for participating in a game that is executed by another information processing apparatus 10. Here, the user A selects the icon image IC1 of the game G1 so that the game G1 possessed by the information processing apparatus 10a is executed.

When the icon image IC1 of the game G1 is selected, a mode selection screen PS2 is displayed. The mode selection screen PS2 is for allowing a user to select any of a plurality of modes in which the selected game G1 is to be executed.

For example, the mode selection screen PS2 is used to select any of "play alone", "play with someone who does not possess software", and "local communication play". The "play alone" mode is associated with a single-play mode. When the "play alone" mode is selected, the game G1 is only executed by the information processing apparatus 10a (the user A).

The "local communication play" mode is associated with a local communication multi-play mode. When the "local communication play" mode is selected, the game G1 is executed by a plurality of information processing apparatuses 10 having the game G1. For example, when the users of the information processing apparatuses 10a to 10c select the "local communication play" mode, the information processing apparatuses 10a to 10c establish a wireless LAN connection to form a wireless network. The wireless network formed by the information processing apparatuses 10a to 10c may be an infrastructure-mode network over which any one of the information processing apparatuses 10a to 10c serves as a base station, and the other apparatuses serve as a terminal station. In this case, the terminal stations communicate with each other through the base station. Alternatively, the wireless network formed by the information processing apparatuses 10a to 10c may be an ad hoc mode network in which direct communication is performed between terminal stations. When a game is being executed in the local communication multi-play mode, operation data related to an operation performed on each information processing apparatus 10 is exchanged over the network, and a game process is executed based on the operation data in each information processing apparatus 10. Each information processing apparatus 10 generates a game image based on the result of the game process, and displays the game image on the display 12 thereof. It should be noted that there may be an online mode in which a game is performed between a plurality of information processing apparatuses connected to the Internet.

The "play with someone who does not possess software" mode is a mode in which the game G1 is executed between the information processing apparatus 10a and another information processing apparatus 10 that does not possess the game G1 using local communication as described above. When the "play with someone who does not possess software" is selected in the information processing apparatus 10a, the information processing apparatus 10a serves as a base apparatus, and starts transmitting a beacon as described above (step S1). During this period of time, the base apparatus displays a recruiting screen PS3 indicating that other users are being recruited, for example.

Meanwhile, the information processing apparatus 10b also initially displays a menu screen CS1. At this time, the information processing apparatus 10b has not yet served as a subsidiary apparatus, and operates alone. The information processing apparatus 10b possesses game programs for the game G2 and the game G3, and does not possess a game program for the game G1. Therefore, the menu screen CS1 of the information processing apparatus 10b displays the icon image IC2 of the game G2 and the icon image IC3 of the game G3, and does not display the icon image IC1 of the game G1.

Here, the user B of the information processing apparatus 10b, which does not possess a program for the game G1, selects the command image showing "participate in another game" on the menu screen CS1 in order to play the game G1 together with the user A. When the command image showing "participate in another game" is selected, the information processing apparatus 10b serves as a subsidiary apparatus, and tries to receive a beacon, as described above (step S1).

It should be noted that the information processing apparatus 10b may try to receive a beacon during displaying of the menu screen CS1, and before reception of a beacon, a command image showing "participate in another game" may not be able to be selected, and when a beacon is received from the base apparatus located around the information processing apparatus 10b, the command image may be able to be selected. In addition, when a beacon is received from the base apparatus during displaying of the menu screen CS1, the command image showing "participate in another game" may be displayed in a different form, which notifies the user of the subsidiary apparatus that some base apparatus is recruiting the users of subsidiary apparatuses to participate in a game.

The subsidiary apparatus, when receiving a beacon from the base apparatus, displays a search result screen CS2. The subsidiary apparatus, when receiving a beacon from the base apparatus, displays information related to the base apparatus on the search result screen CS2. Here, when there are a plurality of base apparatuses around the subsidiary apparatus (e.g., in the range of several meters to several tens of meters), the subsidiary apparatus may receive beacons from a plurality of base apparatuses. The subsidiary apparatus, when receiving beacons from a plurality of base apparatuses, displays information related to each of the plurality of base apparatus on the search result screen CS2. For example, when there are the user A's information processing apparatus 10a and another user X's information processing apparatus 10x around the subsidiary apparatus, a list of information related to these base apparatuses is displayed. For example, the name of the users of base apparatuses or the names of base apparatuses may be displayed as the information related to base apparatuses. In addition, in the list of base apparatuses, the titles of games executed in the base apparatuses may be displayed. It should be noted that the list of base apparatuses may not all be displayed on a single screen and may be allowed to be scrolled on the screen.

The user B of the information processing apparatus 10b selects the base apparatus A (user A) from a plurality of base apparatuses on the search result screen CS2 in order to play a game together with the user A. It should be noted that when the subsidiary apparatus receives a beacon from only one base apparatus, the subsidiary apparatus may display a participation command screen CS3 described below instead of the search result screen CS2.

When the base apparatus A is selected, the information processing apparatus 10b transmits an action request frame to the information processing apparatus 10a as described above. In response to this, the information processing apparatus 10a transmits action response frames (steps S2 and S3). As a result, a relatively large size of data such as an icon image of the game G1 is transmitted from the base apparatus to the subsidiary apparatus. It should be noted that the base apparatus, when receiving an action request frame from another subsidiary apparatus (e.g., the information processing apparatus 10c), also transmits action response frames to that subsidiary apparatus.

The subsidiary apparatus, when receiving required data such as icon image data, displays the participation command screen CS3 for commanding to participate in the game G1. On the participation command screen CS3, an icon image of the game G1 is displayed based on the icon image data received from the base apparatus. In addition, the subsidiary apparatus displays the title of the game G1, the name of the user (user A) of the base apparatus, an image of a character of the user A, and the like. In addition, on the participation command screen CS3, an image for commanding to participate in the game G1, and an image for commanding to cancel, are displayed. It should be noted that on the search result screen CS2, an icon image of a game possessed by each base apparatus, an image of a character of the user of each base apparatus, and the like may be displayed. In that case, the subsidiary apparatus transmits an action request frame to each base apparatus before displaying the search result screen CS2, and receives action response frames from each base apparatus. For example, before selecting any from a plurality of base apparatuses searched, the subsidiary apparatus may obtain, from each base apparatus, an icon image of a game that can be executed by that base apparatus.

When the subsidiary apparatus is commanded to participate in the game G1, a wireless LAN connection is established between the subsidiary apparatus and the base apparatus (step S4). When a connection is established between the base apparatus and the subsidiary apparatus, necessary information is exchanged between the base apparatus and the subsidiary apparatus (step S5). Here, for example, the subsidiary apparatus transmits subsidiary apparatus data (e.g., the name of the user of the subsidiary apparatus, and an image showing a character of the user of the subsidiary apparatus) to the base apparatus. It should be noted that on the participation command screen CS3, or after the participation command screen CS3 is displayed, an image that prompts to prepare a necessary controller may be displayed. In addition, an indication related to the way of holding a controller (portrait position or landscape position) may be displayed. Information related to a controller that is supported by the game G1, and information related to the way of holding a controller, are contained in a beacon transmitted by the base apparatus, for example. The subsidiary apparatus may display an indication that prompts to prepare a necessary controller or a display related to the holding way, based on the information related to a controller contained in the beacon. It should be noted that the subsidiary apparatus may request information related to a controller using an action request frame, and the base apparatus may transmit that information to the subsidiary apparatus using an action response frame.

Next, as illustrated in FIG. 10, the base apparatus displays a start command screen PS4 for commanding to start the game G1. On the start command screen PS4, a command image showing "start with these members" for commanding to start a game is displayed, for example. In addition, on the start command screen PS4, information related to the user of the subsidiary apparatus is displayed. For example, on the start command screen PS4, the name of the user of the subsidiary apparatus, an image of a character of the user, and the like may be displayed. Although in FIG. 10, only information related to the user B is displayed, when a command to participate in the game G1 is issued on the participation command screen CS3 of the information processing apparatus 10c possessed by the user C, information related to the user C is also displayed on the start command screen PS4. It should be noted that on the start command screen PS4, the user of the base apparatus may be allowed to select the user of a subsidiary apparatus who the user of the base apparatus does not want to participate in a game. When on the start command screen PS4, a subsidiary apparatus which the user of the base apparatus does not want to participate in a game is selected, the base apparatus cuts off communication with that subsidiary apparatus.

Meanwhile, after a command to "participate" is issued on the participation command screen CS3 of the subsidiary apparatus, a start waiting screen CS4 indicating a wait for the start of the game G1 is displayed.

When a command to "start with these members" is issued on the start command screen PS4 of the base apparatus, a game image and audio indicating the start of the game G1 are generated in the base apparatus, and are transmitted from the base apparatus to the subsidiary apparatus (step S6). The game image and audio data are transmitted using UDP. As a result, the base apparatus displays a game start image PS5 indicating the start of the game G1, and the subsidiary apparatus displays the same game start image CS5. It should be noted that the game image and/or audio data may be transmitted from the base apparatus to the subsidiary apparatus using TCP.

When, during execution of the game G1, the user B of the subsidiary apparatus performs a game operation using a controller, the subsidiary apparatus obtains operation data corresponding to the game operation (step S7). The subsidiary apparatus transmits the operation data to the base apparatus (step S8). The operation data is transmitted using UDP. In addition, also in the base apparatus, a game operation is performed using a controller, and operation data corresponding to the game operation is obtained (step S9).

The base apparatus executes a game process based on operation data corresponding to a game operation performed in the base apparatus, and operation data received from the subsidiary apparatus, and generates a game image resulting from the game process (step S10). Thereafter, the base apparatus transmits the generated game image to the subsidiary apparatus (step S11). The game image is transmitted using TCP. It should be noted that a plurality of images may be compressed to produce moving image data, which is transmitted from the base apparatus to the subsidiary apparatus. Alternatively, the game image or moving image data may be transmitted from the base apparatus to the subsidiary apparatus using UDP. As a result, an in-game image PS6 is displayed in the base apparatus while the same in-game image CS6 is displayed in the subsidiary apparatus.

During execution of the game G1, the processes of steps S7 to S11 are repeatedly performed at predetermined frame time intervals (e.g., every 1/60 seconds). As a result, a game is executed between the base apparatus and the subsidiary apparatus. It should be noted that the processes of steps S7 to S11 may not need to be performed in the stated order, and may be performed in a different order, and any of the processes may be skipped. For example, even when, in the step S8, operation data has not been successfully received from the subsidiary apparatus due to communication conditions, the base apparatus may execute the process of step S10 to produce a game image, and transmit the game image to the subsidiary apparatus in step S11.

It should be noted that different in-game images may be displayed on the base apparatus and the subsidiary apparatus. For example, a character corresponding to the user A and a character corresponding to the user B may be arranged in a game space, and an in-game image A including the character corresponding to the user A may be displayed on the base apparatus while an in-game image B including the character corresponding to the user B may be displayed on the subsidiary apparatus. In that case, the base apparatus generates and displays the in-game image A on the display 12, and generates and transmits the in-game image B to the subsidiary apparatus. The subsidiary apparatus displays the in-game image B received from the base apparatus on the display 12.

In addition, the screen may be divided into a plurality of regions, and in-game images including characters corresponding to users may be displayed in the respective corresponding regions.

It should be noted that there may be a mode in which only one of the user of the base apparatus and the user of the subsidiary apparatus plays a game, while the other user only views the game played by that player user. For example, when only the user of the subsidiary apparatus plays a game, operation data is transmitted from the subsidiary apparatus to the base apparatus, which in turn executes a game process based on the operation data from the subsidiary apparatus to generate an image based on the game process, and transmits the image to the subsidiary apparatus and displays a game image on the display of the base apparatus. In the base apparatus, no game operation is performed using a controller. When only the user of the base apparatus plays a game, the base apparatus executes a game process based on operation data of the base apparatus to generate an image based on the game process, and transmits the image to the subsidiary apparatus, and displays a game image on the display of the base apparatus. In the subsidiary apparatus, no game operation is performed using a controller, and only the game image received from the base apparatus is displayed.

### Data Stored in Base Apparatus and Subsidiary Apparatus

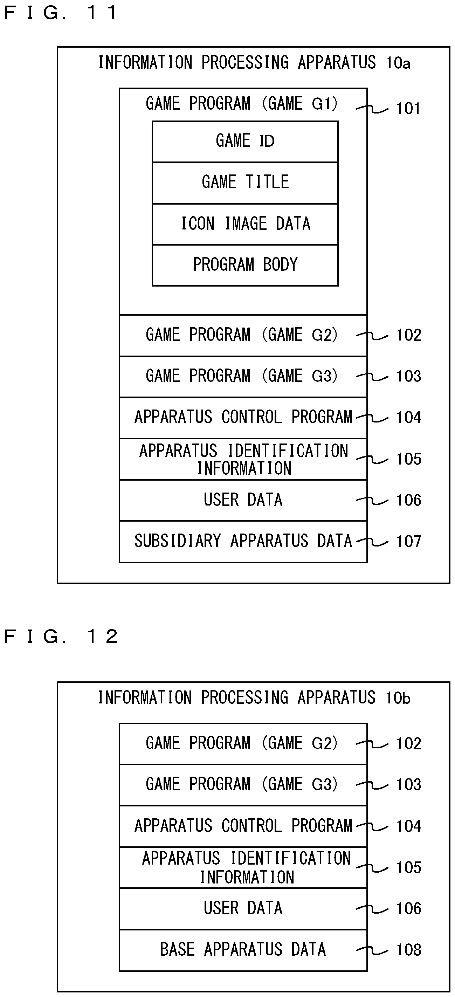

Next, data stored in the base apparatus and the subsidiary apparatus will be described. FIG. 11 is a diagram illustrating an example of data stored in the information processing apparatus 10a as a base apparatus. FIG. 12 is a diagram illustrating an example of data stored in the information processing apparatus 10b as a subsidiary apparatus. The pieces of data illustrated in FIGS. 11 and 12 are stored in a memory of each information processing apparatus 10 (specifically, any of an external storage medium, the flash memory 26, the DRAM 27, a memory in the processor 21, and a memory in the network communication unit 24).

As illustrated in FIG. 11, the information processing apparatus 10a stores a game program 101 for the game G1, a game program 102 for the game G2, a game program 103 for the game G3, a device control program 104, apparatus identification information 105, user data 106, and subsidiary apparatus data 107.

The game program 101 for the game G1 is, for example, stored in the flash memory 26 or an external storage medium. The game program 101 contains the game ID of the game G1, the game title of the game G1, and the icon image data of the game G1. The game program 101 also contains a program body for executing the game G1. The game program 102 and the game program 103 also store data similar to that of the game program 101.

The device control program 104, which is for controlling the information processing apparatus 10a, contains a basic program for providing a menu operation using a menu screen, and booting up a game program, and a communication program for communicating with other apparatuses. The basic program is, for example, stored in the flash memory 26. The communication program is, for example, stored in a memory in the network communication unit 24.

The apparatus identification information 105, which is for identifying the information processing apparatus 10a, is a MAC address, for example. The apparatus identification information 105 may also contain the serial number or the like of the information processing apparatus 10a. The apparatus identification information 105 may also contain information that is for identifying the information processing apparatus 10a, and is set by the user.

The user data 106, which is related to the user of the information processing apparatus 10a, may store the name of the user, data (e.g., shape data and texture image data) related to a character corresponding to the user, and the like, for example.

The subsidiary apparatus data 107 is obtained from the subsidiary apparatus. The subsidiary apparatus data 107 contains apparatus identification information of the subsidiary apparatus, the name of the user of the subsidiary apparatus, and data (e.g. image data) related to the user of the subsidiary apparatus, for example.

Meanwhile, as illustrated in FIG. 12, as with the base apparatus, the information processing apparatus 10b as a subsidiary apparatus stores the game program 102 for the game G2, the game program 103 for the game G3, a device control program 104, apparatus identification information 105, and user data 106. These pieces of data are similar to those stored in the base apparatus and will not be described. The information processing apparatus 10b further stores base apparatus data 108.

The base apparatus data 108 is obtained from the base apparatus before a connection is established between the subsidiary apparatus and the base apparatus. Specifically, the base apparatus data 108 contains the apparatus identification information (e.g., a MAC address) of the base apparatus, a game ID, the icon image data of the game G1 , the title data of the game G1, character image data of the user of the base apparatus, and the like, all of which are obtained from the base apparatus.

### Details of Processes Executed in Base Apparatus and Subsidiary Apparatus

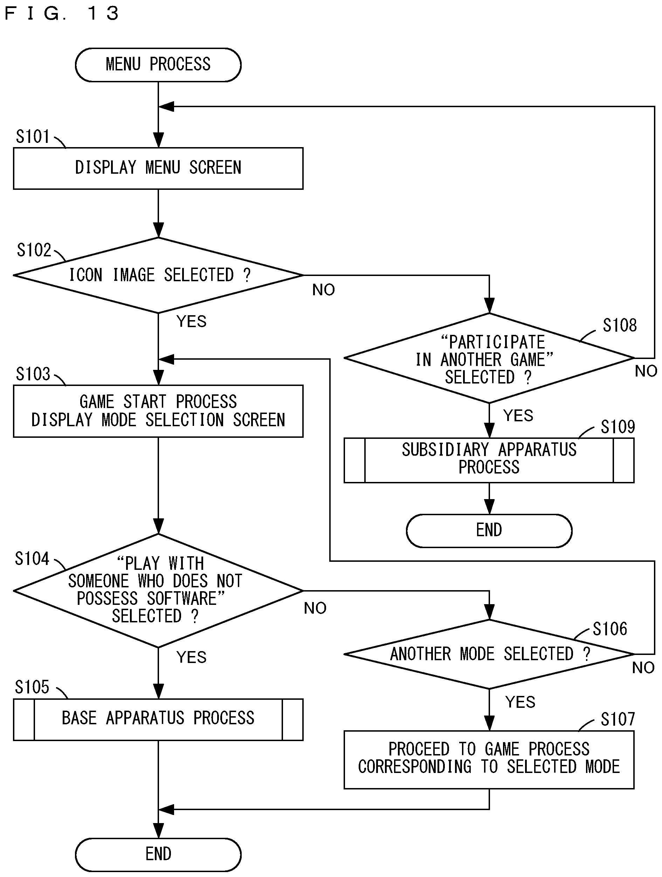

Next, processes executed in the base apparatus and the subsidiary apparatus will be described in detail with reference to FIGS. 13 to 19. It should be noted that the processes illustrated in FIGS. 13 to 19 are executed by the processor 21 or the processor of the network communication unit 24 executing a predetermined program (the game program 101 or the device control program 104).

FIG. 13 is a flowchart illustrating an example of a menu process executed in the information processing apparatus 10. When the information processing apparatus 10 is turned on, the processor 21 executes the device control program 104 stored in, for example, the flash memory 26 to execute the menu process of FIG. 13. It should be noted that the processor 21 obtains operation data from a controller with appropriate timing during execution of the menu process of FIG. 13.

Specifically, the processor 21 generates and displays a menu screen on the display 12 (step S101). As a result, for example, the menu screen PS1 or the menu screen CS1 of FIG. 9 is displayed. On the menu screen, icon images of games that can be executed in the information processing apparatus 10 are displayed. For example, on the menu screen of the information processing apparatus 10a, respective icon images of the games G1, G2, and G3, which can be executed in the information processing apparatus 10a, are displayed.

Next, the processor 21 determines whether or not an icon image of a game displayed on the menu screen has been selected based on operation data from a controller (step S102). If an icon image has been selected (step S102: YES), the processor 21 executes a game start process, and displays the mode selection screen PS2 (step S103). Specifically, the processor 21 reads a game program for the game corresponding to the selected icon image, and executes a program for selecting a mode included in the game program to display the mode selection screen PS2 in order to receive an input from the user. On the mode selection screen PS2, an image related to the game (an image of a character or background) may be displayed. It should be noted that a mode selection function (the function of selecting a mode using the mode selection screen PS2) may not be contained in the game program, and may be previously contained in the main body apparatus 2. In that case, at the time of step S103, the game program is not read, and the same screen is displayed on the mode selection screen PS2 no matter what game is subsequently performed.

Next, the processor 21 determines whether or not the "play with someone who does not possess software" mode has been selected on the mode selection screen PS2, based on operation data from a controller (step S104).

If the "play with someone who does not possess software" mode has been selected (step S104: YES), then the processor 21 proceeds to a base apparatus process (step S105). Thereafter, the information processing apparatus 10 serves as a base apparatus that provides the game G1 to the subsidiary apparatus, and the base apparatus process is executed until a base apparatus in-game process described below is ended. The base apparatus process is described below in detail.

If the result of determined in step S104 is negative (NO), the processor 21 determines whether or not any other mode has been selected on the mode selection screen PS2, based on operation data from a controller (step S106). If any other mode has been selected (step S106: YES), the processor 21 proceeds to a game process corresponding to the selected mode (step S107). Thereafter, the process of step S107 is executed until the game G1 in the selected mode is ended. The process of step S107 will not be described in detail.

If the result of the determination in step S106 is negative (NO), the processor 21 executes the process of step S103 again. The processes of steps S103, S104, and S106 are repeatedly executed at predetermined frame time intervals (e.g., every 1/60 seconds).

If no game icon image has been selected on the menu screen (step S102: NO), the processor 21 determines whether or not a command image showing "participate in another game", based on operation data from a controller (step S108).

When the command image showing "participate in another game" has not been selected on the menu screen (step S108: NO), the processor 21 executes the process of step S101 again. The processes of steps S101, S102, and S108 are repeatedly executed at predetermined frame time intervals (e.g., every 1/60 seconds).

Meanwhile, when the command image showing "participate in another game" has been selected on the menu screen (step S108: YES), then the processor 21 proceeds to a subsidiary apparatus process (step S109). Thereafter, the information processing apparatus 10 serves as a subsidiary apparatus that receives the game G1 from the base apparatus, and executes the subsidiary apparatus process until a subsidiary apparatus in-game process described below is ended. The subsidiary apparatus process is described below in detail.

### Base Apparatus Process

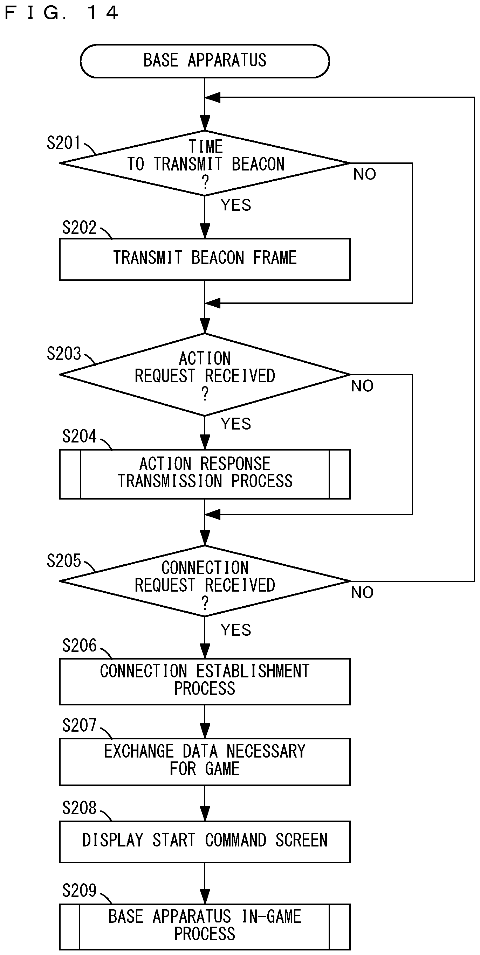

Next, the base apparatus process will be described in detail. A case in which the information processing apparatus 10a serves as a base apparatus will be described below. FIG. 14 is a flowchart illustrating an example of the base apparatus process.

As illustrated in FIG. 14, the base apparatus determines whether or not it is time to transmit a beacon (step S201). If the base apparatus determines that it is time to transmit a beacon (step S201: YES), the network communication unit 24 of the base apparatus transmits a beacon frame in a broadcast manner (step S202). For example, the base apparatus transmits a beacon frame to unspecified other apparatuses. The beacon frame contains apparatus identification information for identifying the base apparatus, and a game ID for identifying data related to the game G1. Specifically, the header of the beacon frame contains the MAC address of the base apparatus, and a basic service set identifier (BSSID). In addition, the vendor-specific region (the vendor specific information element of the frame body) of the beacon frame contains the game **ID** of the game G1. The vendor-specific region of the beacon frame may also contain the name of the user of the base apparatus, and the title of the game G1. The vendor-specific region of the beacon frame may also contain information related to a controller that supports the game G1. The base apparatus repeatedly transmits the beacon frame at predetermined time intervals (e.g., every several tens to several hundreds of milliseconds).

When step S202 is executed or the result of the determination in step S201 is negative (NO), the base apparatus determines whether or not an action request frame has been received (step S203).

When the base apparatus determines that an action request frame has been received (step S203: YES), the base apparatus executes an action response transmission process (step S204). The action response transmission process is for transmitting action response frames corresponding to the action request frame. When the action response transmission process of step S204 is executed, a relatively large size of data (e.g., icon image data) related to the game G1 is transmitted from the base apparatus in response to the request from the subsidiary apparatus. The action response transmission process will be described below.

### Action Response Transmission Process

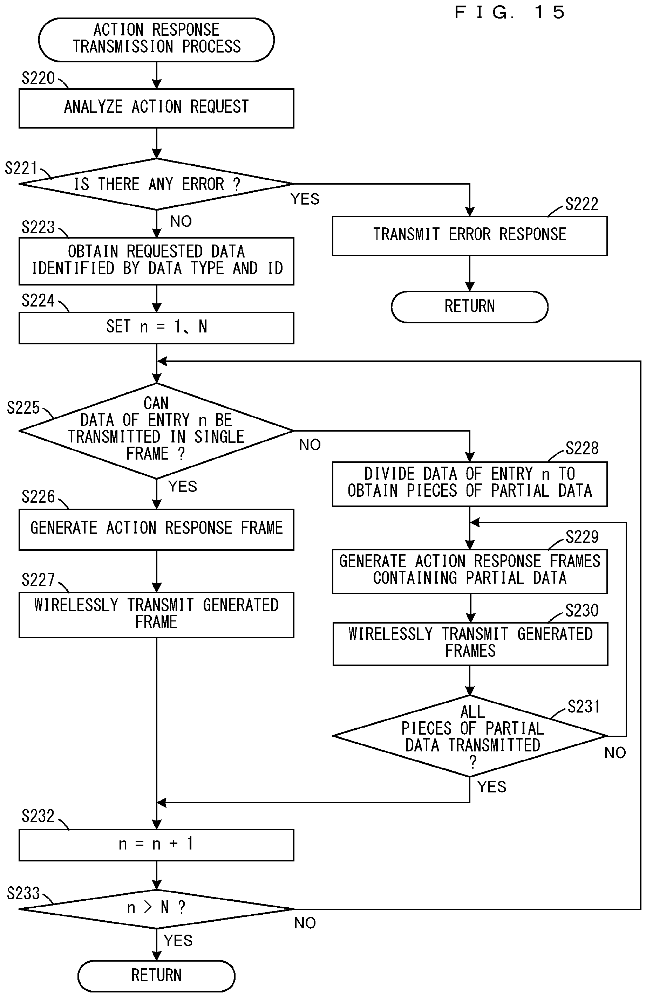

FIG. 15 is a flowchart illustrating an example of the action response transmission process of step S204 in the base apparatus process. Although not illustrated, the base apparatus repeatedly transmits a beacon frame at the predetermined time intervals even during execution of the action response transmission process of step S204.

As illustrated in FIG. 15, the base apparatus analyzes the action request frame from the subsidiary apparatus (step S220). Next, the base apparatus determines whether or not there is any error in the action request frame (step S221). For example, if the version contained in the action request frame is not supported by the base apparatus, the base apparatus determines that there is an error in the action request frame. If the data type 32 contained in the action request frame is not supported by the base apparatus, the base apparatus determines that there is an error in the action request frame. If the base apparatus finds that there is any deficiency in the configuration of the action request frame, the base apparatus determines that there is an error in the action request frame.

If the base apparatus determines that there is an error in the action request frame (step S221: YES), the base apparatus sets a value indicating an error in the data type 42 of an action response frame, and transmits the action response frame (error response) to the subsidiary apparatus (step S222). Thereafter, the base apparatus ends the process of FIG. 15.

If the base apparatus determines that there is no error in the action request frame (step S221: NO), the base apparatus obtains requested data identified by the data type 32 and the ID 33 of the action request frame (step S223). For example, in the case in which in the action request frame, information indicating icon image data is designated as requested data, the base apparatus retrieves the icon image data IMG_A stored in itself. Next, the base apparatus sets "1" in a variable n, and sets "N" based on the number of entries 35 contained in the action request frame (step S224).

Next, the base apparatus determines whether or not data identified by an entry n in the action request frame can be transmitted in a single frame (step S225). Specifically, if the size of the entry n is larger than the maximum receivable size, the base apparatus determines that the data identified by the entry n cannot be transmitted in a single frame. It should be noted that the size of the entry n is the maximum value (all bits are "1"), the base apparatus determines whether or not the total size of requested data is larger than the maximum receivable size.

If the base apparatus determines that the data identified by the entry n can be transmitted in a single frame (step S225: YES), the base apparatus generates an action response frame containing the data identified by the entry n (step S226). Specifically, the base apparatus retrieves, from the requested data obtained in step S223, data having a size specified in the entry n from an offset value specified in the entry n, and generates an action response frame containing that data. The base apparatus also sets the request number 41 and the data type 42 in the action response frame to the same values of the request number 31 and the data type 32 in the action request frame. The base apparatus also sets the offset 44 and the size 45 in the action response frame to the offset and the size specified in the entry n. The base apparatus also sets the total size 43 in the action response frame to the total size of the requested data. It should be noted that if, in step S226, there is a frame already generated and stored, the base apparatus may use the stored frame again.

Next, the base apparatus wirelessly transmits the generated action response frame to the subsidiary apparatus that has transmitted the action request frame (step S227). After step S227, the base apparatus executes the process of step S232.

If the base apparatus determines that the data identified by the entry n cannot be transmitted in a single frame (step S225: NO), the base apparatus divides the data identified by the entry n to obtain a plurality of pieces of partial data (step S228). Specifically, the base apparatus retrieves, from the requested data obtained in step S223, data having a size specified in the entry n from an offset value specified in the entry n, and divides the retrieved data into a plurality of pieces of partial data. Here, the base apparatus divides the retrieved data into pieces of partial data each of which has a size smaller than the maximum receivable size. For example, the base apparatus, when receiving an action request frame for requesting all the icon image data IMG_A as requested data, divides the icon image data IMG_A into a plurality of pieces (e.g., 15). It should be noted that the division of data may be executed by either the processor 21 or the processor of the network communication unit 24.

Next, the base apparatus generates action response frames containing the partial data obtained in step S228 (step S229). Here, the base apparatus sets the request number 41 and the data type 42 in each action response frame to the same values of the request number 31 and the data type 32 in the action request frame. The base apparatus also sets the offset 44 and the size 45 in each action response frame to the offset and size of the partial data. The base apparatus also sets the total size 43 in each action response frame to the total size of the requested data (e.g., 20000 in FIG. 7). It should be noted that if, in step S229, there is a frame already generated and stored, the base apparatus may use the stored frame again.

After step S229, the base apparatus wirelessly transmits the generated action response frames to the subsidiary apparatus that has transmitted the action request frame (step S230).

Next, the base apparatus determines whether or not all the pieces of partial data obtained in step S228 have been transmitted (step S231). If the base apparatus determines that not all the pieces of partial data have been transmitted (step S231: NO), the base apparatus executes the process of step S229 again. Here, an action response frame containing partial data that has not yet been transmitted is generated.

The processes of steps S229 to S231 are repeatedly executed at predetermined frame transmission intervals, so that all the pieces of partial data obtained by the division in step S228 are transmitted to the subsidiary apparatus.

The base apparatus determines that all the pieces of partial data obtained in step S228 have been transmitted (step S231: YES), the base apparatus executes the process of step S232.

In step S232, the base apparatus adds one to the variable n. Next, the base apparatus determines whether or not n is greater than N (step S233). Here, "N" is the number of entries specified in the action request frame.

If the result of the determination in step S233 is positive (YES), the base apparatus ends the process of FIG. 15, and returns to the process of FIG. 14. If the result of the determination in step S233 is negative (NO), the base apparatus executes the process of step S225 again. As a result, data identified by the next entry in the action request frame is transmitted.

Referring back to FIG. 14, if step S204 is executed, or the result of the determination in step S203 is negative (NO), the base apparatus determines whether or not a connection request has been received from the subsidiary apparatus (step S205). If a participation command has been issued by the user through the participation command screen CS3, the subsidiary apparatus transmits a connection request to the base apparatus in a connection establishment process of step S309 described below. Here, the base apparatus determines whether or not a connection request has been received from the subsidiary apparatus.

The base apparatus, when receiving a connection request from the subsidiary apparatus (step S205: YES), executes a connection establishment process (step S206). Specifically, the base apparatus, when receiving an association request from the subsidiary apparatus, determines whether or not to establish a connection to the subsidiary apparatus, and when determining to establish the connection, transmits an association response indicating permission of a connection to the subsidiary apparatus. As a result, the base apparatus and the subsidiary apparatus share a communication parameter and an association ID, so that a connection is established between the base apparatus and the subsidiary apparatus.

After the connection establishment process, the base apparatus exchanges data necessary for a game with the subsidiary apparatus (step S207). For example, subsidiary apparatus data (the name of the user of the subsidiary apparatus, an image of a character corresponding to the user of the subsidiary apparatus, and the like) is transmitted from the subsidiary apparatus to the base apparatus.

Next, the base apparatus displays the start command screen PS4 (step S208). Here, the base apparatus obtains operation data, and determines whether or not a start command for the game G1 has been issued. Until the start command has been issued, the base apparatus repeatedly executes the process of step S208 at predetermined frame time intervals. It should be noted that on the start command screen PS4, a subsidiary apparatus (user) that the user of the base apparatus does not want to participate in a game may be allowed to be selected.

When a start command for the game G1 is issued on the start command screen PS4, the base apparatus starts the game G1, notifies the subsidiary apparatus of the start of the game G1, and proceeds to a base apparatus in-game process (step S209). The base apparatus in-game process is executed by the base apparatus during execution of the game G1 until the end of the game G1. The base apparatus in-game process of step S209 is described below in detail.

It should be noted that the processes of steps S202, S204, S206, and S207 may be executed in parallel. For example, during execution of the action response transmission process in response to an action request from a certain subsidiary apparatus, a beacon frame may be transmitted periodically, and the connection establishment process may be executed for another subsidiary apparatus.

### Subsidiary Apparatus Process

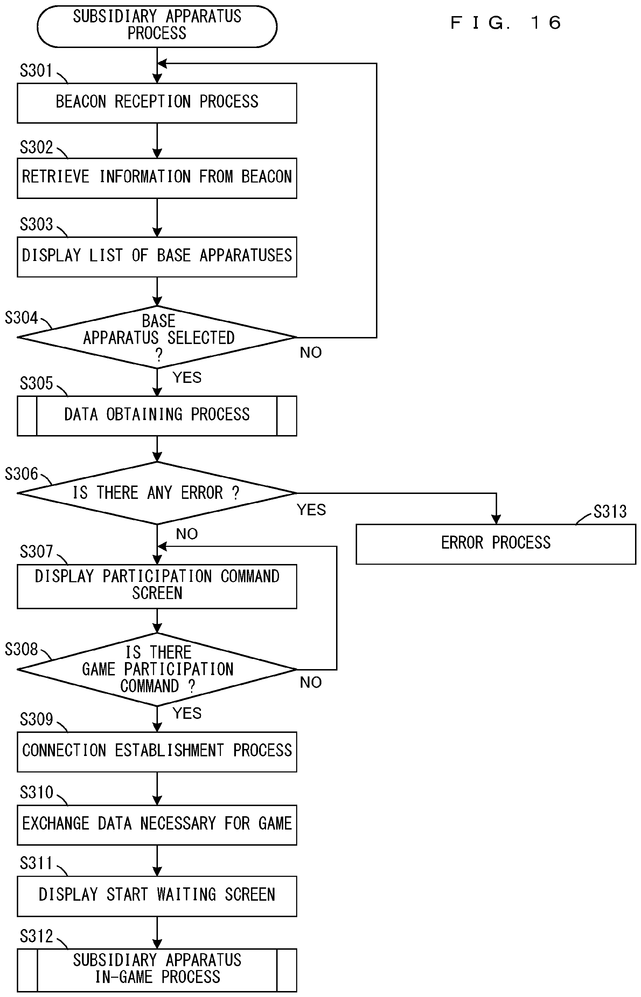

Next, the subsidiary apparatus process will be described in detail. A case in which the information processing apparatus 10b serves as a subsidiary apparatus will be described below. FIG. 16 is a flowchart illustrating an example of the subsidiary apparatus process. It should be noted that the subsidiary apparatus obtains operation data from the controller 3 or 4 with appropriate timing during execution of the subsidiary apparatus process of FIG. 16.

As illustrated in FIG. 16, the information processing apparatus 10b as a subsidiary apparatus executes a beacon reception process (step S301). Specifically, the network communication unit 24 of the subsidiary apparatus tries to receive a beacon by scanning a plurality of channels. The subsidiary apparatus, when receiving a beacon, retrieves information from the received beacon frame (step S302). For example, the subsidiary apparatus retrieves a game ID and the MAC address of a base apparatus from the beacon. The subsidiary apparatus may also retrieve, from the beacon, a game title, the name of the user of a base apparatus, information related to a controller, and the like.

Next, the subsidiary apparatus displays a list of base apparatuses based on the obtained information on the display 12 (step S303). Here, the search result screen CS2 of FIG. 9 is displayed.

Next, the subsidiary apparatus determines whether or not any one has been selected from one or more base apparatuses displayed on the search result screen CS2, based on the operation data (step S304).

If no base apparatus has been selected (step S304: NO), the subsidiary apparatus executes the process of step S301 again.

If a base apparatus has been selected (step S304: YES), the subsidiary apparatus executes a data obtaining process (step S305). The data obtaining process is for allowing the subsidiary apparatus to obtain a relatively large size of data such as the above icon image data from the base apparatus using an action frame. The data obtaining process of step S305 will be described below in detail.

### Data Obtaining Process

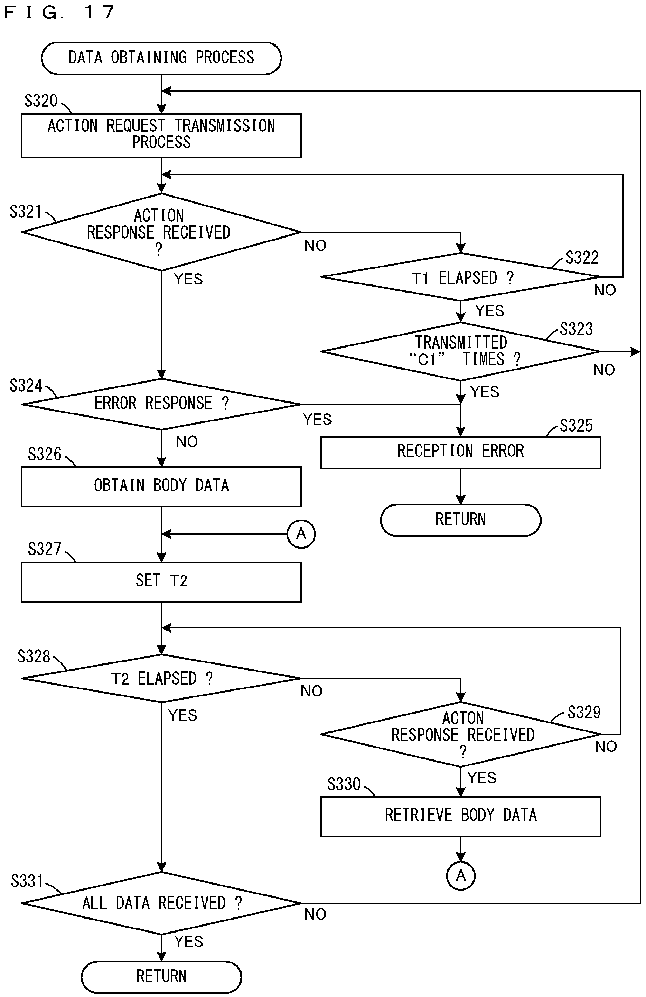

FIG. 17 is a flowchart illustrating an example of the data obtaining process of step S305 in the subsidiary apparatus process.

As illustrated in FIG. 17, the subsidiary apparatus initially executes an action request transmission process (step S320). Specifically, the network communication unit 24 of the subsidiary apparatus generates an action request frame, and wirelessly transmits the action request frame to the base apparatus selected in step S304. For example, when the subsidiary apparatus transmits an action request frame to the selected base apparatus for the first time, the action request frame contains a value indicating an icon image that is set as the data type 32, a value based on the game ID that is set as the ID 33, "1" that is set as the number of entries 35, "0" that is set as the offset 36a, and a maximum value that is set as the size 36b.

Next, the subsidiary apparatus determines whether or not an action response frame corresponding to the transmitted action request frame has been received from the base apparatus (step S321).

If no action response frame has been received (step S321: NO), the subsidiary apparatus determines whether or not the first time limit T1 has elapsed since transmission of the action request frame (step S322).

If the first time limit T1 has elapsed (step S322: YES), the subsidiary apparatus determines whether or not the same action request frame has been transmitted C1 (C1 is a constant) times (step S323). If the same action request frame has not been transmitted C1 times (step S323: NO), the subsidiary apparatus executes the process of step S320 again. Here, the subsidiary apparatus transmits an action request frame for requesting the same data. If the same action request frame has been transmitted C1 times (step S323: YES), the process of FIG. 17 is ended, considering that a reception error has occurred (step S325). The first time limit T1 may be set to a fixed time (e.g., 100 to 200 ms), or may vary depending on the data type of requested data, for example.

If the first time limit T1 has not elapsed (step S322: NO), the subsidiary apparatus executes the process of step S321 again.

If the subsidiary apparatus determines that an action response frame has been received (step S321: YES), the subsidiary apparatus determines whether or not the received action response frame is an error response, based on the data type of the frame (step S324). Here, in step S222, it is determined whether or not the base apparatus has transmitted an error response. If the subsidiary apparatus determines that the received frame is an error response (step S324: YES), the subsidiary apparatus ends the process of FIG. 17, considering that a reception error has occurred (step S325).

If the subsidiary apparatus determines that the received frame is not an error response (step S324: NO), the subsidiary apparatus retrieves the body data contained in the action response frame (step S326).

Next, the subsidiary apparatus sets the second time limit T2 (step S327). Specifically, the subsidiary apparatus calculates the number of remaining frames necessary to receive remaining data. The subsidiary apparatus compares a time obtained by multiplying the number of remaining frames by a fixed time T3 (e.g., 50 to 60 ms) with a time obtained by multiplying T3 by a fixed value C2, and sets the shorter time as the second time limit T2. The number of remaining frames is obtained by subtracting the number of received action response frames corresponding to the same request number from the number of frames calculated based on the entry 36 contained in the action request frame, for example.

For example, if the subsidiary apparatus transmits, to the base apparatus, an action request frame specifying that requested data is the "icon image data IMG_A", the subsidiary apparatus receives an action response frame in which the total size is set to "20000", the offset is set to "0", and the size is set to "1360" as the first action response frame. In this case, the number of remaining frames is "14", and the shorter of a value obtained by multiplying "14" by T3 and a value obtained by T3 × C2 is set as the second time limit T2.

Next, the subsidiary apparatus determines whether or not the second time limit T2 has elapsed since reception of the immediately previous action response frame (step S328).

If the second time limit T2 has not elapsed (step S328: NO), the subsidiary apparatus determines whether or not an action response frame has been received (step S329). If no action response frame has been received (step S329: NO), the subsidiary apparatus executes the process of step S328 again.

If the subsidiary apparatus determines that an action response frame has been received (step S329: YES), the subsidiary apparatus retrieves body data contained in the received action response frame (step S330), and executes the process of step S327 again.

If the second time limit T2 has elapsed (step S328: YES), the subsidiary apparatus executes the process of the next step S331. It should be noted that if it is the C3-th time that the subsidiary apparatus transmits an action request for requesting the same data, then when the second time limit T2 has elapsed, the subsidiary apparatus ends the process of FIG. 17, considering that a reception error has occurred. "C3" may be different from or the same as the above "C1".

In step S331, the subsidiary apparatus determines whether or not all data has been received. Here, the subsidiary apparatus determines whether or not all data that should be obtained has been received. If not all data has been received (step S331: NO), the subsidiary apparatus executes the process of step S320 again.

For example, in step S331, the subsidiary apparatus determines whether or not all pieces of partial data obtained by dividing requested data (e.g., the icon image data IMG_A) have been received. Specifically, the subsidiary apparatus determines whether or not all the requested data has been received, based on the offset and size of the body data (partial data) received in steps S326 and S330. For example, if none of the partial data IMG_2, IMG_3, and IMG_15 of the icon image data IMG_A has been received, the subsidiary apparatus determines in step S331 that the result is negative ("NO"), and executes the process of step S320 again. In this case, the subsidiary apparatus transmits an action request frame for requesting the base apparatus to transmit again the partial data IMG_2, IMG_3, and IMG_15, which have not been received.

In addition, in step S331, if there are a plurality of pieces of requested data to be obtained by the subsidiary apparatus from the base apparatus, the subsidiary apparatus determines whether or not all the pieces of requested data have been received. For example, if the size of the "title data TXT_A" indicating the title of a game is relatively large, the subsidiary apparatus cannot receive that data from a beacon. In this case, the subsidiary apparatus obtains the "title data TXT_A" in a plurality of action response frames. For example, even if the subsidiary apparatus has received all the "icon image data IMG_A", then when the subsidiary apparatus has not received the "title data TXT_A", the subsidiary apparatus determines in step S331 that the result is negative ("NO"), and executes the process of step S320 again. In this case, in step S320, the subsidiary apparatus transmits an action request frame for requesting the "title data TXT_A" to the base apparatus. By receiving a plurality of action response frames corresponding to that action request frame, the subsidiary apparatus receives the "title data TXT_A" from the base apparatus. It should be noted that in addition to the icon image data and the title data, the subsidiary apparatus may request the base apparatus to transmit other requested data.

If the subsidiary apparatus determines that all data has been received (step S331: YES), the subsidiary apparatus ends the process of FIG. 17, and returns to the process of FIG. 16.

Referring back to FIG. 16, after the data obtaining process of step S305, the subsidiary apparatus determines whether or not an error has occurred (step S306). Here, it is determined whether or not an error has occurred in the data obtaining process of step S305. If an error has occurred (step S306: YES), the subsidiary apparatus executes an error process (step S313). Here, for example, the subsidiary apparatus displays an indication that the subsidiary apparatus has failed to receive data from the base apparatus.

If no error has occurred (step S306: NO), the subsidiary apparatus displays the participation command screen CS3 on the display 12 (step S307).

Next, the subsidiary apparatus determines whether or not a game participation command has been issued on the participation command screen CS3, based on operation data (step S308). If no game participation command has been issued on the participation command screen CS3 (step S308: NO), the subsidiary apparatus executes the process of step S307 again.

If a participation command has been issued on the participation command screen CS3 (step S308: YES), the subsidiary apparatus executes the connection establishment process (step S309). Here, the subsidiary apparatus transmits a connection request to the base apparatus to establish a connection between the subsidiary apparatus and the base apparatus. Specifically, after authentication is performed between the subsidiary apparatus and the base apparatus, the subsidiary apparatus transmits an association request to the base apparatus, and receives an association response indicating connection permission from the base apparatus. As a result, a connection is established between the base apparatus and the subsidiary apparatus.

Next, data necessary for a game is exchanged between the subsidiary apparatus and the base apparatus (step S310). For example, the subsidiary apparatus transmits subsidiary apparatus data (e.g., the name of the user of the subsidiary apparatus, an image of a character corresponding to the user, and the like) to the base apparatus.

Next, the subsidiary apparatus displays the start waiting screen CS4 (step S311). If, during displaying of the start waiting screen CS4, the subsidiary apparatus is notified of the start of the game G1 by the base apparatus, the subsidiary apparatus proceeds to the subsidiary apparatus in-game process (step S312).

### Base Apparatus In-game Process

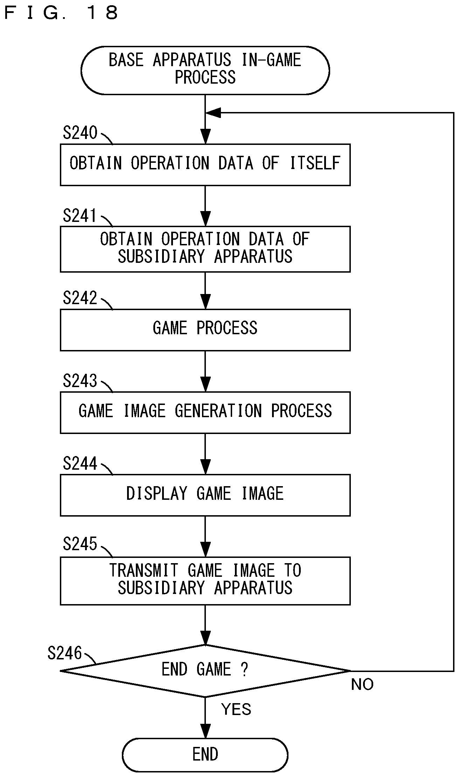

Next, the base apparatus in-game process in the base apparatus after a game is started between the base apparatus and the subsidiary apparatus will be described in detail. FIG. 18 is a flowchart illustrating an example of the base apparatus in-game process of step S209.

As illustrated in FIG. 18, the base apparatus obtains operation data from the controllers 3 and 4 coupled thereto (step S240).

Next, the base apparatus obtains operation data from the subsidiary apparatus (step S241). Specifically, the network communication unit 24 of the base apparatus obtains operation data wirelessly transmitted from the subsidiary apparatus to which a connection has been established.

Next, the base apparatus executes a game process based on the operation data obtained in steps S240 and S241 (step S242). For example, in the case in which the game G1, in which a first character corresponding to the base apparatus and a second character corresponding to the subsidiary apparatus appear in a virtual space, is performed, the base apparatus controls the first character based on the operation data obtained in step S240 while controlling the second character based on the operation data obtained in step S241.

Next, the base apparatus executes a game image generation process (step S243). The base apparatus generates a game image based on a virtual camera provided in the virtual space, for example. The image capture range of the virtual camera covers the first and second characters. Alternatively, the base apparatus may generate a first game image based on a first virtual camera arranged behind the first character, and a second game image based on a second virtual camera arranged behind the second character.

Next, the base apparatus displays the game image generated in step S243 on the display 12 (step S244). It should be noted that the base apparatus may display the game image on a display device (e.g., a television) that is different from the display 12 and is coupled to the base apparatus.

Next, the base apparatus transmits the game image generated in step S243 to the subsidiary apparatus (step S245). Specifically, the network communication unit 24 of the base apparatus transmits the generated game image to the subsidiary apparatus to which a connection has been established. It should be noted that the base apparatus transmits audio data corresponding to the result of the game process, along with the game image, to the subsidiary apparatus.

Next, the base apparatus determines whether or not to end the game (step S246). For example, if the game has been finished (e.g., in a racing game, a moving object for each user has reached the finish point), the user of the base apparatus issues a command to abort the game during the game, or the base apparatus receives operation data related to abortion of the game from the subsidiary apparatus during the game, the result of the determination by the base apparatus in step S246 is positive ("YES"). If the result of the determination by the base apparatus in step S246 is positive ("YES"), the base apparatus ends the game, and transmits a game end notification to the subsidiary apparatus. If the result of the determination by the base apparatus in step S246 is negative ("NO"), the base apparatus executes the process of step S240 again. The processes of steps S240 to S246 are repeatedly executed at predetermined frame time intervals (e.g., every 1/60 seconds), so that the game proceeds.

### Subsidiary Apparatus In-game Process

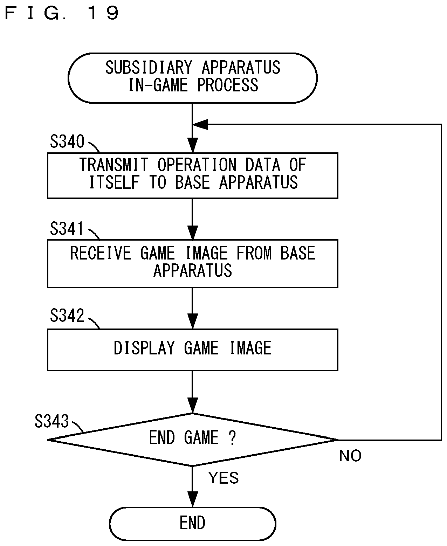

Next, the subsidiary apparatus in-game process in the subsidiary apparatus after the start of a game will be described in detail. FIG. 19 is a flowchart illustrating an example of the subsidiary apparatus in-game process of step S312.

As illustrated in FIG. 19, the subsidiary apparatus transmits operation data to the base apparatus (step S340). Specifically, the subsidiary apparatus obtains operation data output from the controllers 3 and 4 thereof. Thereafter, the network communication unit 24 of the subsidiary apparatus transmits the obtained operation data to the base apparatus to which a connection has been established.

Next, the subsidiary apparatus receives a game image from the base apparatus (step S341). Specifically, the network communication unit 24 of the subsidiary apparatus receives a game image from the base apparatus to which a connection has been established. It should be noted that the subsidiary apparatus receives audio data together with the game image.

Next, the subsidiary apparatus displays the received game image on the display 12 (step S342). It should be noted that the subsidiary apparatus may display the game image on a display device (e.g., a television) that is different from the display 12 and is coupled to the subsidiary apparatus.

Next, the subsidiary apparatus determines whether or not to end the game (step S343). For example, if the subsidiary apparatus receives a game end notification from the base apparatus, or the user of the subsidiary apparatus issues a command to abort the game during the game, the subsidiary apparatus ends the game. If the subsidiary apparatus does not end the game, the subsidiary apparatus executes the process of step S340 again. The processes of steps S340 to S343 are repeatedly executed at predetermined frame time intervals (e.g., every 1/60 seconds), so that the game proceeds.

It should be noted that the processes in the flowcharts are merely illustrative. For example, the steps may be executed in a different order, other steps may be added, or some of the steps may be removed.

For example, in the above embodiment, if the result of the determination in step S308 is positive ("YES"), the connection establishment process of step S309 is executed. Specifically, if a command to "participate" is issued on the participation command screen CS3 of the subsidiary apparatus, a connection is established between the base apparatus and the subsidiary apparatus. **In** another embodiment, a connection is established between the base apparatus and the subsidiary apparatus with different timing. For example, a connection between the base apparatus and the subsidiary apparatus may be established with any timing after the data obtaining process of step S305 has been executed, or with timing before the participation command screen CS3 is displayed. Alternatively, a connection between the base apparatus and the subsidiary apparatus may be established during displaying of the participation command screen CS3.

**In** addition, in the above embodiment, if the result of the determination in step S304 is positive ("YES"), the data obtaining process of step S305 is executed. Specifically, if one base apparatus is selected from a list of base apparatuses, a relatively large size of data related to a game is obtained from the base apparatus. In another embodiment, the data obtaining process of step S305 may be executed before a base apparatus is selected. For example, after the subsidiary apparatus receives a beacon in step S302, the data obtaining process of step S305 may be executed, and then, the process of step S303 may be executed. In that case, the subsidiary apparatus receives an icon image or the like of an executable game from a plurality of base apparatuses located therearound. Thereafter, in the list of base apparatuses, the subsidiary apparatus may display an icon image of a game that can be executed in each base apparatus.

As described above, in this exemplary embodiment, an information processing apparatus having a predetermined game program (10a; base apparatus) of a plurality of information processing apparatuses (e.g., 10a to 10c) provides a game to other information processing apparatuses that do not have the program (10b, 10c; subsidiary apparatuses). The base apparatus broadcasts a game ID, or apparatus identification information of the base apparatus, which are a relatively small size of information, using a beacon. The subsidiary apparatus, when receiving the beacon from the base apparatus, transmits an action request frame for requesting a relatively large size of data related to the game such as icon image data to the base apparatus. The base apparatus divides the icon image data into a plurality of pieces of partial data, and transmits the plurality of pieces of partial data in a plurality of separate action response frames to the subsidiary apparatus. The subsidiary apparatus obtains the icon image data by receiving the plurality of action response frames.

As a result, the subsidiary apparatus can, for example, receive icon image data, which is relatively large, from the base apparatus before the start of a game without establishing a connection between the subsidiary apparatus and the base apparatus. The user of the subsidiary apparatus can decide whether to participate in a game by viewing an icon image or the like.

It is considered that before the start of a game, the base apparatus and the subsidiary apparatus establish a wireless LAN connection to establish a TCP connection, and icon image data or the like is transmitted from the base apparatus to the subsidiary apparatus. However, in that case, it takes some time to achieve establishment of a connection or TCP handshaking. In addition, when the base apparatus establishes a connection to the subsidiary apparatus in order to transmit icon image data or the like, resources are consumed for the subsidiary apparatus, which may or may not actually execute a game.

In this exemplary embodiment, a relatively large size of data such as icon image data is transmitted from the base apparatus to the subsidiary apparatus using an action frame even without establishment of a wireless LAN connection between the base apparatus and the subsidiary apparatus. Therefore, it does not take time to transmit and receive an icon image or the like, resulting in a reduction in a load on the base apparatus.

In addition, even when not all icon image data has been received by the subsidiary apparatus, the subsidiary apparatus can request re-transmission of remaining data using an action frame. As a result, icon image data can be reliably obtained from the base apparatus. The above mechanism of re-transmission using an action frame can further reduce a load on the base apparatus than the mechanism of re-transmission using TCP. Specifically, in the mechanism of re-transmission using TCP, a data transmitter transmits packets having sequence numbers, recognizes the status of data reception by receiving a response from a receiver, and if there is no response corresponding to some sequence number, transmits data to the transmitter again. In such a mechanism, the base apparatus as a transmitter needs to manage the status of reception of the receiver based on the sequence numbers, resulting in a potential load on the base apparatus. In the above embodiment, the base apparatus only transmits an action response frame to the subsidiary apparatus in response to an action request frame from the subsidiary apparatus, and does not need to manage the status of reception of the subsidiary apparatus. Therefore, a load on the base apparatus can be reduced.

### (Variations)

In the foregoing, this exemplary embodiment has been described. The above embodiment is merely illustrative, and changes and modifications may, for example, be made thereto as described below.

For example, in the above embodiment, the base apparatus transmits a beacon containing the apparatus identification information of the base apparatus, and data identification information (e.g., a game ID) for identifying data transmitted from the base apparatus, while the subsidiary apparatus, when receiving the beacon, transmits an action request frame for requesting the base apparatus to transmit data identified by the data identification information. The base apparatus may use another frame to transmit the apparatus identification information of the base apparatus and the data identification information to apparatuses located therearound. For example, in another embodiment, the base apparatus may use an action frame to transmit the apparatus identification information and the data identification information. The base apparatus may periodically transmit an action frame containing the apparatus identification information and the data identification information to subsidiary apparatuses in a broadcast manner or a unicast manner.

In addition, in another embodiment, the subsidiary apparatus may transmit a probe request for obtaining the apparatus identification information of the base apparatus and the data identification information, while the base apparatus may transmit a probe response to the probe request to the subsidiary apparatus, thereby transmitting the apparatus identification information of the base apparatus and the data identification information. Thereafter, the subsidiary apparatus may transmit an action request frame for requesting the base apparatus to transmit a relatively large size of data such as icon image data as described above, based on the data identification information and the apparatus identification information contained in the probe response.

**In** addition, in the above embodiment, the subsidiary apparatus transmits an action request frame that is addressed to the base apparatus, while the base apparatus transmits an action response frame that is addressed to the subsidiary apparatus. **In** another embodiment, the subsidiary apparatus or the base apparatus may transmit an action frame in a broadcast manner. For example, the subsidiary apparatus may transmit an action request frame that is addressed to the base apparatus. The base apparatus, when receiving the action request frame, may transmit an action response frame containing a request number specified by the action request frame, and data requested by the action request frame, to unspecified apparatuses (in a broadcast or multicast manner). The subsidiary apparatus can obtain requested data by receiving an action response frame having the same request number.

In addition, in the above embodiment, an action frame is used to transmit a relatively large size of data from the base apparatus to the subsidiary apparatus. In another embodiment, a relatively large size of data may be transmitted from the base apparatus to the subsidiary apparatus using other frames instead of an action frame.

In addition, in the above embodiment, assuming that a game is played between a base apparatus that has a game program and a subsidiary apparatus that does not have the game program, data related to the game (e.g., the icon image data of the game G1) is transmitted from the base apparatus to the subsidiary apparatus using an action frame before a connection is established between the base apparatus and the subsidiary apparatus. In another embodiment, even in the case in which both the base apparatus and the subsidiary apparatus have a game program, data related to a game may be transmitted from the base apparatus to the subsidiary apparatus using an action frame before a connection is established between the base apparatus and the subsidiary apparatus. After the data is transmitted from the base apparatus to the subsidiary apparatus using an action frame, the base apparatus and the subsidiary apparatus establish communication, and the game is played between the base apparatus and the subsidiary apparatus. In that case, the base apparatus and the subsidiary apparatus execute the respective game programs.

In addition, in the above embodiment, a game application is provided as an application from the base apparatus to the subsidiary apparatus. In another embodiment, in addition to game applications, any other applications may be provided from the base apparatus to the subsidiary apparatus. In that case, the icon image, title, and the like of an application may be transmitted from the base apparatus to the subsidiary apparatus using the above scheme before a connection is established between the base apparatus and the subsidiary apparatus.

In the foregoing, the present invention has been described. The foregoing description is merely for illustrating the present invention, and various changes and modification may be made thereto.

While certain example systems, methods, devices and apparatuses have been described herein, it is to be understood that the appended claims are not to be limited to the systems, methods, devices and apparatuses disclosed, but on the contrary, are intended to cover various modifications and equivalent arrangements included within the spirit and scope of the appended claims.

## Claims

1. An information processing method performed on a second information processing apparatus (10b), the information processing method comprising:
a step (S320) for, when determining that a first frame containing first apparatus identification information for identifying a first information processing apparatus (10a), and data identification information for identifying data transmitted from the first information processing apparatus, has been received, transmitting, by wireless communication, a second frame containing second apparatus identification information for identifying the second information processing apparatus, and data request information for requesting the data, which is identified based on the data identification information, with the second frame addressed to the first information processing apparatus, which is identified by the first apparatus identification information;
a step (S326, S330) for receiving a plurality of third frames transmitted from the first information processing apparatus, which has received the second frame, with the plurality of third frames addressed to the second information processing apparatus, wherein the plurality of third frames contain a plurality of pieces of partial data obtained by dividing the data; and
a step (S320) for, when determining that there is at least one of the plurality of pieces of partial data that has not been received, transmitting, by wireless communication, a fourth frame containing the second apparatus identification information and data re-request information for requesting re-transmission of the data that has not been received, with the fourth frame addressed to the first information processing apparatus, which is identified by the first apparatus identification information.

2. The information processing method according to claim 1, wherein
the transmission of the first frame and the transmission of the plurality of third frames by the first information processing apparatus, and the transmission of the second frame and the transmission of the fourth frame by the second information processing apparatus, are executed without wireless communication being established between the first information processing apparatus and the second information processing apparatus.

3. The information processing method according to claim 1, wherein
the plurality of third frames each contain an offset and a size of a respective one of the plurality of pieces of partial data, and
the second information processing apparatus identifies any of the plurality of pieces of partial data that has not been received, based on the offsets and sizes of the plurality of pieces of partial data, and transmits the fourth frame for requesting re-transmission of the identified data.

4. The information processing method according to claim 1, wherein
the second information processing apparatus transmits the second frame containing a maximum receivable size of a frame that the second information processing apparatus is allowed to receive, and
the second information processing apparatus receives the plurality of third frames containing the plurality of pieces of partial data obtained by the first information processing apparatus dividing the data according to the maximum receivable size.

5. The information processing method according to claim 1, wherein
the second information processing apparatus transmits the second frame containing request identification information for identifying request of the data, and
the second information processing apparatus receives the plurality of third frames containing the request identification information.

6. The information processing method according to claim 1, wherein
the second information processing apparatus transmits the fourth frame containing information indicating the number of pieces of requested data, and information for identifying each piece of requested data.

7. The information processing method according to claim 1, wherein the second frame and the fourth frame have the same structure.

8. The information processing method according to claim 1, wherein
the second information processing apparatus repeatedly transmits the fourth frame until all of the data has been received.

9. The information processing method according to claim 1, wherein
the second information processing apparatus, when receiving at least one of the plurality of third frames, sets a time limit based on remaining data of the data, and tries to receive the remaining data until the time limit has elapsed.

10. The information processing method according to claim 1, wherein
the second information processing apparatus, when receiving at least one of the plurality of third frames containing error indication information that is transmitted when the first information processing apparatus determines that there is an error in the second frame, stops receiving the following third frames.

11. The information processing method according to claim 1, wherein
the data is moving image data or still image data, and
the second information processing apparatus displays a moving image or a still image based on the received data.

12. The information processing method according to claim 1, wherein the second frame, the third frame, and the fourth frame are an action frame.

13. The information processing method according to claim 1, wherein the first frame is a beacon frame.

14. The information processing method according to claim 1, wherein the first frame is an action frame.

15. The information processing method according to claim 1, wherein
the data identification information is an application ID for identifying an application.

16. The information processing method according to claim 1, wherein
the second information processing apparatus, after receiving the data, transmits a connection request for establishing a connection between the first information processing apparatus and the second information processing apparatus.

17. The information processing method according to claim 16, wherein
after a connection is established between the first information processing apparatus and the second information processing apparatus, an application related to the data is executed between the first information processing apparatus and the second information processing apparatus.

18. The information processing method according to claim 17, wherein
the application is a game application, and
the second information processing apparatus
transmits operation data related to a game operation to the first information processing apparatus with a connection established therebetween,
receives, from the first information processing apparatus, a game image based on a result of a game process executed by the first information processing apparatus based on the operation data, and
displays the game image received from the first information processing apparatus.

19. The information processing method according to claim 17, wherein
the first frame contains information related to an input device supported by the application.

20. An information processing method performed on a first information processing apparatus (10a), the information processing method comprising:
a step (S202) for transmitting, by wireless communication, a first frame containing first apparatus identification information for identifying the first information processing apparatus, and data identification information for identifying data transmitted from the first information processing apparatus;
a step (S204) for, when determining that a second frame transmitted from a second information processing apparatus having received the first frame with the second frame addressed to the first information processing apparatus, and containing second apparatus identification information for identifying the second information processing apparatus and data request information for requesting transmission of the data, has been received, transmitting, by wireless communication, a plurality of third frames containing a plurality of pieces of partial data obtained by dividing the data, with the plurality of third frames addressed to the second information processing apparatus, which is identified by the second apparatus identification information; and
a step (S230) for, when determining that a fourth frame transmitted from the second information processing apparatus, which has failed to receive at least one of the plurality of pieces of partial data, with the fourth frame addressed to the first information processing apparatus, and containing the second apparatus identification information and data re-request information for requesting re-transmission of at least a portion of the data, has been received, re-transmitting, by wireless communication, a fifth frame containing the data re-requested with the fourth frame to the second information processing apparatus, which is identified by the second apparatus identification information.

21. The information processing method according to claim 20, wherein
the transmission of the first frame, the transmission of the plurality of third frames, and the transmission of the fifth frame by the first information processing apparatus, and the transmission of the second frame and the transmission of the fourth frame by the second information processing apparatus, are executed without wireless communication being established between the first information processing apparatus and the second information processing apparatus.

22. The information processing method according to claim 20, wherein
the second frame contains a maximum receivable size of a frame that the second information processing apparatus is allowed to receive, and
the first information processing apparatus divides the data into the plurality of pieces of partial data according to the maximum receivable size.

23. The information processing method according to claim 20, wherein
the second frame contains request identification information for identifying request of the data, and
the first information processing apparatus transmits the plurality of third frames containing the request identification information.

24. The information processing method according to claim 20, wherein
the fourth frame contains information indicating the number of pieces of requested data, and information for identifying each piece of requested data, and
the first information processing apparatus transmits the fifth frame based on the information indicating the number of pieces of requested data, and the information for identifying each piece of requested data.

25. The information processing method according to claim 20, wherein the third frame and the fifth frame have the same structure.

26. The information processing method according to claim 20, wherein
the first information processing apparatus determines whether or not there is any error in the received second frame, and when determining that there is an error, transmits the third frame containing information indicating the error.

27. The information processing method according to claim 20, wherein the data is moving image data or still image data.

28. The information processing method according to claim 20, wherein
the second frame, the third frame, the fourth frame, and the fifth frame are an action frame.

29. The information processing method according to claim 20, wherein the first frame is a beacon frame.

30. The information processing method according to claim 20, wherein the first frame is an action frame.

31. The information processing method according to claim 20, wherein
the data identification information is an application ID for identifying an application.

32. The information processing method according to claim 20, wherein
the first information processing apparatus, when receiving a connection request transmitted from the second information processing apparatus after the second information processing apparatus receives the data, establishes a connection between the first information processing apparatus and the second information processing apparatus.

33. The information processing method according to claim 32, wherein
after a connection is established between the first information processing apparatus and the second information processing apparatus, an application related to the data is executed between the first information processing apparatus and the second information processing apparatus.

34. The information processing method according to claim 33, wherein
the application is a game application, and
the first information processing apparatus
receives operation data related to a game operation from the second information processing apparatus with a connection established therebetween,
executes a game process based on the operation data received from the second information processing apparatus,
generates a game image based on the game process, and
transmits the game image to the second information processing apparatus with a connection established therebetween.

35. The information processing method according to claim 33, wherein
the first frame contains information related to an input device supported by the application.

36. An information processing program to be executed by a computer (21, 24) of a second information processing apparatus (10b), wherein the information processing program causes the computer to function as:
means (21, 24, S320) for, when determining that a first frame containing first apparatus identification information for identifying a first information processing apparatus, and data identification information for identifying data transmitted from the first information processing apparatus, has been received, transmitting, by wireless communication, a second frame containing second apparatus identification information for identifying the second information processing apparatus, and data request information for requesting the data, which is identified based on the data identification information, with the second frame addressed to the first information processing apparatus, which is identified by the first apparatus identification information;
means (21, 24, S326, S330) for receiving a plurality of third frames transmitted from the first information processing apparatus, which has received the second frame, with the plurality of third frames addressed to the second information processing apparatus, wherein the plurality of third frames contain a plurality of pieces of partial data obtained by dividing the data; and
means (21, 24, S320) for, when determining that there is at least one of the plurality of pieces of partial data that has not been received, transmitting, by wireless communication, a fourth frame containing the second apparatus identification information and data re-request information for requesting re-transmission of the data that has not been received, with the fourth frame addressed to the first information processing apparatus, which is identified by the first apparatus identification information.

37. A second information processing apparatus (10b) comprising:
means (21, 24, S320) for, when determining that a first frame containing first apparatus identification information for identifying a first information processing apparatus, and data identification information for identifying data transmitted from the first information processing apparatus, has been received, transmitting, by wireless communication, a second frame containing second apparatus identification information for identifying the second information processing apparatus, and data request information for requesting the data, which is identified based on the data identification information, with the second frame addressed to the first information processing apparatus, which is identified by the first apparatus identification information;
means (21, 24, S326, S330) for receiving a plurality of third frames transmitted from the first information processing apparatus, which has received the second frame, with the plurality of third frames addressed to the second information processing apparatus, wherein the plurality of third frames contain a plurality of pieces of partial data obtained by dividing the data; and
means (21, 24, S320) for, when determining that there is at least one of the plurality of pieces of partial data that has not been received, transmitting, by wireless communication, a fourth frame containing the second apparatus identification information and data re-request information for requesting re-transmission of the data that has not been received, with the fourth frame addressed to the first information processing apparatus, which is identified by the first apparatus identification information.

38. An information processing program to be executed by a computer (21, 24) of a first information processing apparatus (10a), wherein the information processing program causes the computer to function as:
means (21, 24, S202) for transmitting, by wireless communication, a first frame containing first apparatus identification information for identifying the first information processing apparatus, and data identification information for identifying data transmitted from the first information processing apparatus;
means (21, 24, S204) for, when determining that a second frame transmitted from a second information processing apparatus having received the first frame with the second frame addressed to the first information processing apparatus, and containing second apparatus identification information for identifying the second information processing apparatus and data request information for requesting transmission of the data, has been received, transmitting, by wireless communication, a plurality of third frames containing a plurality of pieces of partial data obtained by dividing the data, with the plurality of third frames addressed to the second information processing apparatus, which is identified by the second apparatus identification information; and
means (21, 24, S230) for, when determining that a fourth frame transmitted from the second information processing apparatus, which has failed to receive at least one of the plurality of pieces of partial data, with the fourth frame addressed to the first information processing apparatus, and containing the second apparatus identification information and data re-request information for requesting re-transmission of at least a portion of the data, has been received, re-transmitting, by wireless communication, a fifth frame containing the data re-requested with the fourth frame to the second information processing apparatus, which is identified by the second apparatus identification information.

39. A first information processing apparatus (10a) comprising:
means (21, 24, S202) for transmitting, by wireless communication, a first frame containing first apparatus identification information for identifying the first information processing apparatus, and data identification information for identifying data transmitted from the first information processing apparatus;
means (21, 24, S204) for, when determining that a second frame transmitted from a second information processing apparatus having received the first frame with the second frame addressed to the first information processing apparatus, and containing second apparatus identification information for identifying the second information processing apparatus and data request information for requesting transmission of the data, has been received, transmitting, by wireless communication, a plurality of third frames containing a plurality of pieces of partial data obtained by dividing the data, with the plurality of third frames addressed to the second information processing apparatus, which is identified by the second apparatus identification information; and
means (21, 24, S230) for, when determining that a fourth frame transmitted from the second information processing apparatus, which has failed to receive at least one of the plurality of pieces of partial data, with the fourth frame addressed to the first information processing apparatus, and containing the second apparatus identification information and data re-request information for requesting re-transmission of at least a portion of the data, has been received, re-transmitting, by wireless communication, a fifth frame containing the data re-requested with the fourth frame to the second information processing apparatus, which is identified by the second apparatus identification information.

40. A wireless communication system comprising a first information processing apparatus (10a) and a second information processing apparatus (10b) both having a wireless communication function, wherein
the first information processing apparatus includes:
information transmission means (21, 24, S202) for transmitting, by wireless communication, a first frame containing first apparatus identification information for identifying the first information processing apparatus, and data identification information for identifying data transmitted from the first information processing apparatus;
request determination means (21, 24, S203) for determining whether or not a second frame containing second apparatus identification information for identifying the second information processing apparatus, and data request information for requesting transmission of the data;
data transmission means (21, 24, S204) for, when determining that the second frame has been received, transmitting, by wireless communication, a plurality of third frames containing a plurality of pieces of partial data obtained by dividing the data, with the plurality of third frames addressed to the second information processing apparatus, which is identified by the second apparatus identification information;
re-request determination means (21, 24, S203) for determining whether or not a fourth frame containing the second apparatus identification information, and data re-request information for requesting re-transmission of at least a portion of the data, has been received; and
data re-transmission means (21, 24, S230) for, when determining the fourth frame has been received, re-transmitting, by wireless communication, a fifth frame containing the at least a portion of the data re-requested by the fourth frame, with the fifth frame addressed to the second information processing apparatus, which is identified by the second apparatus identification information, and
the second information processing apparatus includes:
reception determination means (21, 24, S301) for determining whether or not the first frame has been received;
data request transmission means (21, 24, S320) for, when determining that the first frame has been received, transmitting, by wireless communication, the second frame containing the second apparatus identification information, and the data request information for requesting the data identified based on the data identification information contained in the first frame, with the second frame addressed to the first information processing apparatus, which is identified by the first apparatus identification information;
reception means (21, 24, S326, S330) for receiving the plurality of third frames;
unsuccessful reception determination means (21, 24, S331) for determining whether or not there is any of the plurality of pieces of partial data that has not been received; and
data re-request transmission means (21, 24, S320) for, when determining that there is at least one of the plurality of pieces of partial data that has not been received, transmitting, by wireless communication, the fourth frame containing the second apparatus identification information, and the data re-request information for requesting re-transmission of the data that has not been received, with the fourth frame addressed to the first information processing apparatus, which identified by the first apparatus identification information.
